(19) Europäisches Patentamt / European Patent Office / Office européen des brevets

(11) **EP 2 898 694 B1**

(12) **EUROPEAN PATENT SPECIFICATION**

(45) Date of publication and mention of the grant of the patent:
**19.06.2019 Bulletin 2019/25**

(51) Int Cl.:
**H04N 19/50** (2014.01)   **H04N 11/04** (2006.01)
**H04N 19/30** (2014.01)

(21) Application number: **13839900.1**

(22) Date of filing: **25.07.2013**

(86) International application number:
**PCT/JP2013/004538**

(87) International publication number:
**WO 2014/045506 (27.03.2014 Gazette 2014/13)**

(54) **VIDEO COMPRESSION WITH COLOR SPACE SCALABILITY**

VIDEOKOMPRESSION MIT FARBRAUMSKALIERBARKEIT

COMPRESSION DE VIDÉO À ÉCHELONNABILITÉ D'ESPACE COULEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **24.09.2012   US 201261704776 P**
**28.09.2012   US 201213631558**
**20.12.2012   US 201261739907 P**
**04.02.2013   US 201361760634 P**

(43) Date of publication of application:
**29.07.2015 Bulletin 2015/31**

(73) Proprietor: **Huawei Technologies Co., Ltd.**
**Longgang District**
**Shenzhen, Guangdong 518129 (CN)**

(72) Inventors:
• **KEROFSKY, Louis Joseph**
**Camas, Washington 98607 (US)**
• **MISRA, Kiran Mukesh**
**Camas, Washington 98607 (US)**
• **KIM, Seung-Hwan**
**Camas, Washington 98607 (US)**

(74) Representative: **Thun, Clemens et al**
**Mitscherlich PartmbB**
**Patent- und Rechtsanwälte**
**Sonnenstraße 33**
**80331 München (DE)**

(56) References cited:
**WO-A1-2009/051690      WO-A1-2010/004726**
**WO-A1-2012/004709      JP-A- 2010 532 936**
**US-A1- 2005 259 729      US-A1- 2008 175 494**

**US-A1- 2008 175 495      US-A1- 2008 175 497**
**US-A1- 2008 253 672      US-A1- 2010 008 427**

• KEROFSKY L ET AL: "Color Gamut Scalable Video Coding", 12. JCT-VC MEETING; 103. MPEG MEETING; 14-1-2013 - 23-1-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-L0334, 8 January 2013 (2013-01-08), XP030113822,
• KEROFSKY L ET AL: "Color Gamut Scalable Video Coding", 11. JCT-VC MEETING; 102. MPEG MEETING; 10-10-2012 - 19-10-2012; SHANGHAI; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-K0241, 2 October 2012 (2012-10-02), XP030113123, DOI: 10.1109/DCC.2013.29
• AJAY LUTHRA: "Draft Requirements and Discussion on the scalable enhancement of HEVC", 98. MPEG MEETING; 28-11-2011 - 2-12-2011; GENEVA; (MOTION PICTURE EXPERT GROUP OR ISO/IEC JTC1/SC29/WG11),, no. m22556, 21 November 2011 (2011-11-21), XP030051119,

- **AJAY LUTHRA ET AL.: 'Draft Requirements and Discussion on the scalable enhancement of HEVC' INTERNATIONAL ORGANISATION FOR STANDARDISATION ORGANISATION INTERNATIONALE DE NORMALISATION ISO/IEC JTC1/SC29/WG11 CODING OF MOVING PICTURES AND AUDIO M22556 21 November 2011, pages 1 - 20, XP 030051119**

**Description**

Technical Field

This disclosure relates generally to video coding, and, more particularly, to color space prediction for video coding.

Background Art

For example, US 2010/0008427A1 refers to color gamut scalability techniques. Further, US 2005/0259729A1 refers to video coding with quality scalability.

Many systems include a video encoder to implement video coding standards and compress video data for transmission over a channel with limited bandwidth and/or limited storage capacity. These video coding standards can include multiple coding stages such as intra prediction, transform from spatial domain to frequency domain, inverse transform from frequency domain to spatial domain, quantization, entropy coding, motion estimation, and motion compensation, in order to more effectively encode frames.

The prior art also shows:

KEROFSKY L ET AL: "Color Gamut Scalable Video Coding", 12. JCT-VC MEETING; 103. MPEG MEETING; 14-1-2013 - 23-1-2013; GENEVA; (JOINT COLLABORATIVE TEAM ON VIDEO CODING OF ISO/IEC JTC1/SC29/WG11 AND ITU-T SG.16); URL: HTTP:// WFTP3.ITU.INT/AV-ARCH/JCTVC-SITE/,, no. JCTVC-L0334, 8 January 2013 (2013-01-08), XP030113822.

KEROFSKY L ET AL: "Color Gamut Scalable Video Coding",11. JCT-VC MEETING; 102. MPEG MEETING; 10-10-2012 - 19-10-2012; SHANGHAI; (JOINT COLLABORATIVE TEAM ON VIDEO CODING OF ISO/IEC JTC1/SC29/WG11 AND ITU-T SG.16); URL: HTTP://WFTP3.ITU.INT/AV-ARCH/JCTVC-SITE/,, no. JCTVC-K0241, 2 October 2012 (2012-10-02), XP030113123.

Summary of Invention

Technical Problem

Traditional digital High Definition (HD) content can be represented in a format described by video coding standard International Telecommunication Union Radiocommunication Sector (ITU-R) Recommendation BT.709, which defines a resolution, a color gamut, a gamma, and a quantization bit-depth for video content. With an emergence of higher resolution video standards, such as ITU-R Ultra High Definition Television (UHDTV), which, in addition to having a higher resolution, can have wider color gamut and increased quantization bit-depth compared to BT.709, many legacy systems based on lower resolution HD content may be unable to utilize compressed UHDTV content. One of the current solutions to maintain the usability of these legacy systems includes separately simulcasting both compressed HD content and compressed UHDTV content. Although a legacy system receiving the simulcasts has the ability to decode and utilize the compressed HD content, compressing and simulcasting multiple bitstreams with the same underlying content can be an inefficient use of processing, bandwidth, and storage resources.

Solution to Problem

The invention is defined in the appended claims.

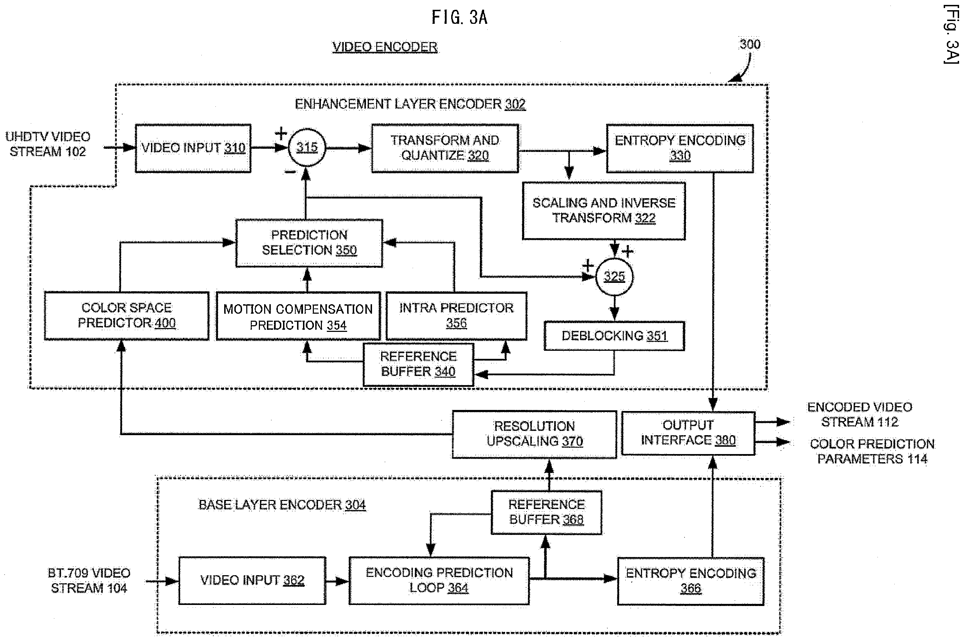

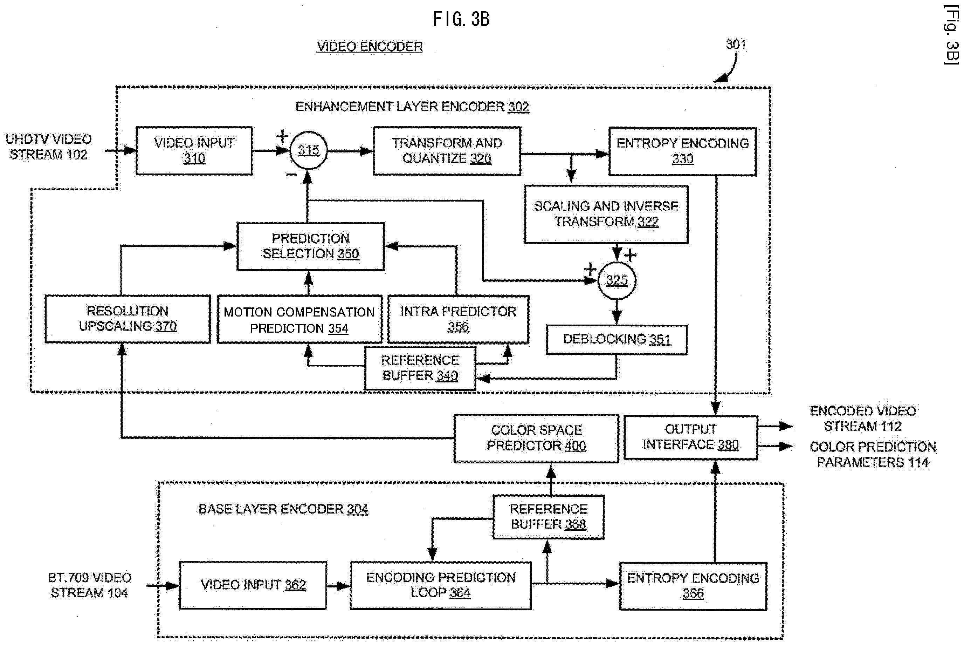

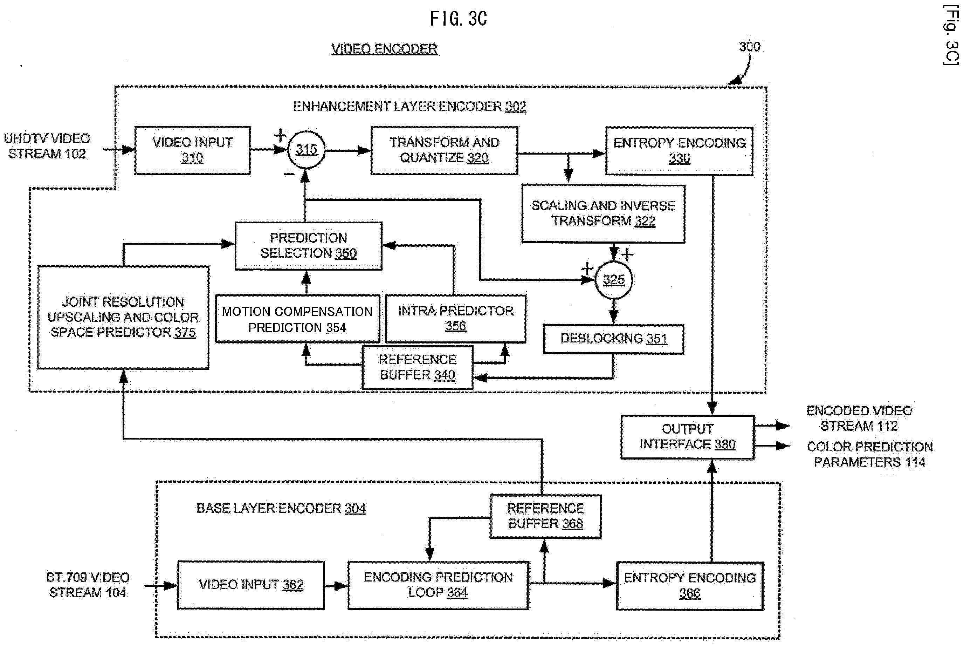

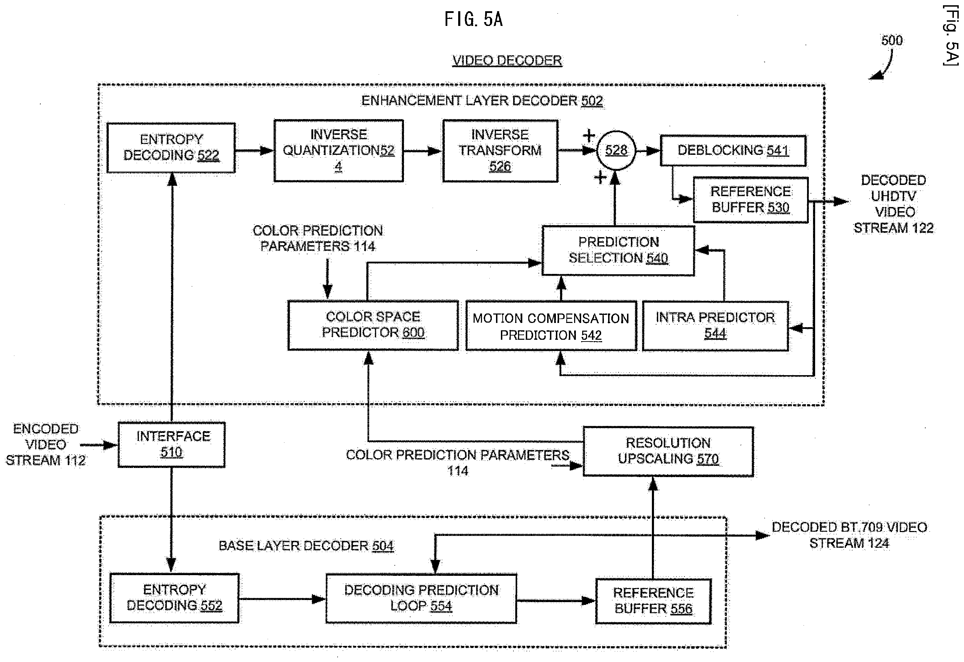

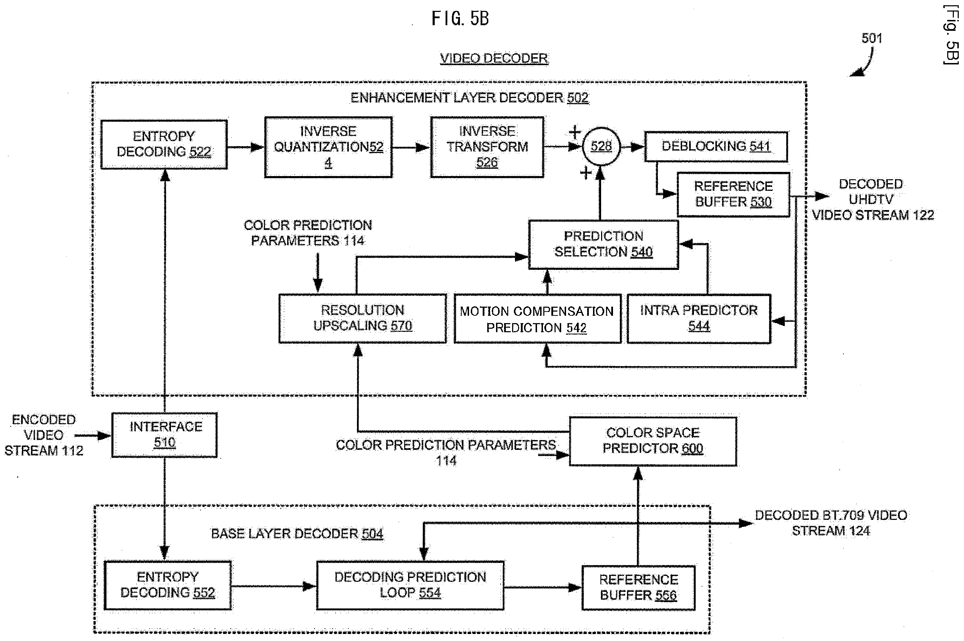

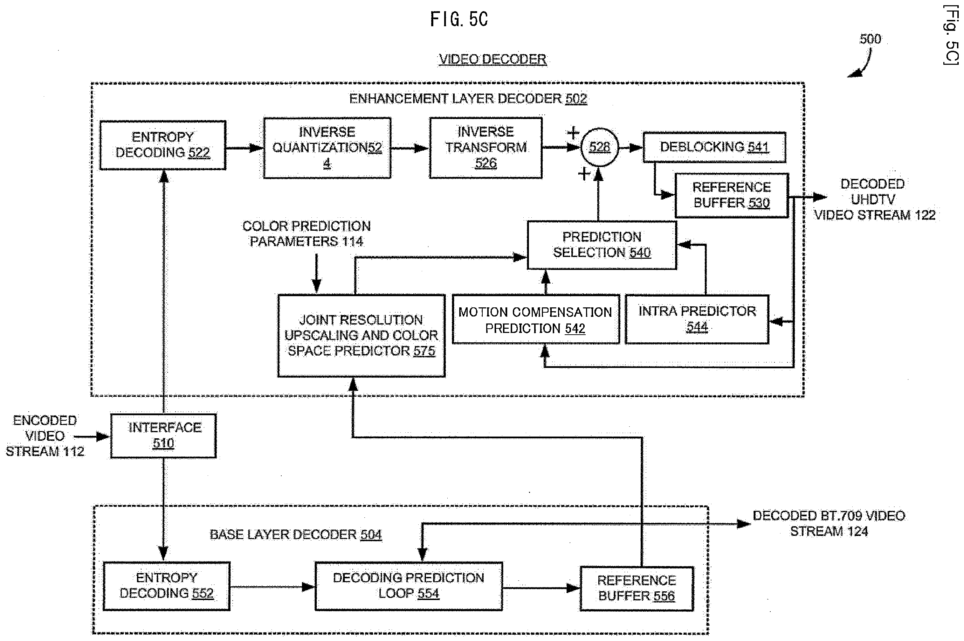

The invention will be more readily understood upon consideration of the following detailed description of the invention, taken in conjunction with the accompanying drawings, wherein the block diagram of a video encoder shown figure 3C is a block diagram of a video encoder corresponding to the claims and the block diagram of a video decoder shown in figure 5C is a block diagram of a video decoder corresponding to the claims, whereas the block diagrams of video encoders in the figures 3A and 3B and the block diagrams of video decoders in the figures 5A and 5B do not correspond to the claims but help to better understand the invention defined in the claims.

Brief Description of Drawings

Figure 1 is a block diagram example of a video coding system.

Figure 2 is an example graph 200 illustrating color gamuts supported in a BT.709 video standard and in a UHDTV video standard.

Figures 3A is a block diagram example of the video encoder shown in Figure 1.

Figures 3B is a block diagram example of the video encoder shown in Figure 1.

Figures 3C is a block diagram example of the video encoder shown in Figure 1.

Figure 4 is a block diagram example of the color space predictor shown in Figure 3A and 3B.

Figures 5A is a block diagram example of the video decoder shown in Figure 1.

Figures 5B is a block diagram example of the video decoder shown in Figure 1.

Figures 5C is a block diagram example of the video decoder shown in Figure 1.

Figure 6 is a block diagram example of a color space predictor shown in Figure 5A and 5B.

Figure 7 is an example operational flowchart for color space prediction in the video encoder shown in Figure 1.

Figure 8 is an example operational flowchart for color space prediction in the video decoder shown in Figure 1.

Figure 9 is another example operational flowchart for color space prediction in the video decoder shown in Figure 1.

## Description of Embodiments

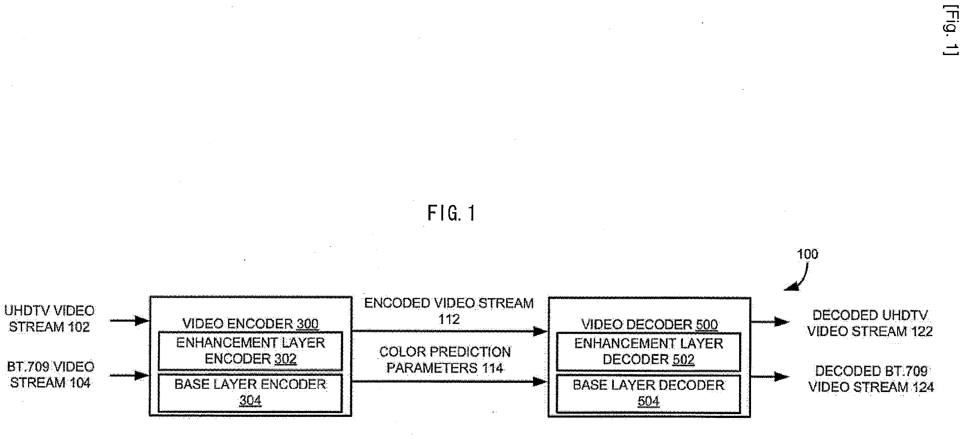

Figure 1 is a block diagram example of a video coding system 100. The video coding system 100 can include a video encoder 300 to receive video streams, such as an Ultra High Definition Television (UHDTV) video stream 102, standardized as BT.2020, and a BT.709 video stream 104, and to generate an encoded video stream 112 based on the video streams. The video encoder 300 can transmit the encoded video stream 112 to a video decoder 500. The video decoder 500 can decode the encoded video stream 112 to generate a decoded UHDTV video stream 122 and/or a decoded BT.709 video stream 124.

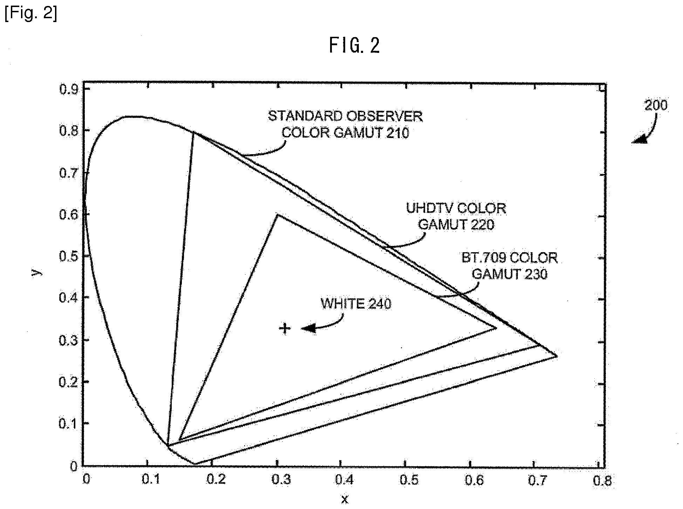

The UHDTV video stream 102 can have a different resolution, different quantization bit-depth, and represent different color gamut compared to the BT.709 video stream 104. For example, a UHDTV or BT.2020 video standard has a format recommendation that can support a 4k (3840x2160 pixels) or an 8k (7680x4320 pixels) resolution and a 10 or 12 bit quantization bit-depth. The BT.709 video standard has a format recommendation that can support a 2k (1920x1080 pixels) resolution and an 8 or 10 bit quantization bit-depth. The UHDTV format recommendation also can support a wider color gamut than the BT.709 format recommendation. Embodiments of the color gamut difference between the UHDTV video standard and the BT.709 video standard will be shown and described below in greater detail with reference to Figure 2.

The video encoder 300 can include an enhancement layer encoder 302 and a base layer encoder 304. The base layer encoder 304 can implement video encoding for High Definition (HD) content, for example, with a codec implementing a Moving Picture Experts Group (MPEG)-2 standard, or the like. The enhancement layer encoder 302 can implement video encoding for UHDTV content. In some embodiments, the enhancement layer encoder 302 can encode an UHDTV video frame by generating a prediction of at least a portion of the UHDTV image frame using a motion compensation prediction, an intra-frame prediction, and a scaled color prediction from a BT.709 image frame encoded in the base layer encoder 302. The video encoder 300 can utilize the prediction to generate a prediction residue, for example, a difference between the prediction and the UHDTV image frame, and encode the prediction residue in the encoded video stream 112.

In some embodiments, when the video encoder 300 utilizes a scaled color prediction from the BT.709 image frame, the video encoder 300 can transmit color prediction parameters 114 to the video decoder 500. The color prediction parameters 114 can include parameters utilized by the video encoder 300 to generate the scaled color prediction. For example, the video encoder 300 can generate the scaled color prediction through an independent color channel prediction or an affine matrix-based color prediction, each having different parameters, such as a gain parameter per channel or a gain parameter and an offset parameter per channel. The color prediction parameters 114 can include parameters corresponding to the independent color channel prediction or the affine matrix-based color prediction utilized by the video encoder 300. In some embodiments, the encoder 300 can include the color prediction parameters 114 in a normative portion of the encoded video stream 112, for example, in a Sequence Parameter Set (SPS), a Picture Parameter Set (PPS), or another lower level section of the normative portion of the encoded video stream 112. In some embodiments, the video encoder 300 can utilize default color prediction parameters 114, which may be preset in the video decoder 500, alleviating the video encoder 300 from having to transmit color prediction parameters 114 to the video decoder 500. Embodiments of video encoder 300 will be described below in greater detail.

The video decoder 500 can include an enhancement layer decoder 502 and a base layer decoder 504. The base layer decoder 504 can implement video decoding for High Definition (HD) content, for example, with a codec implementing a Moving Picture Experts Group (MPEG)-2 standard, or the like, and decode the encoded video stream 112 to generate a decoded BT.709 video stream 124. The enhancement layer decoder 502 can implement video decoding for UHDTV content and decode the encoded video stream 112 to generate a decoded UHDTV video stream 122.

In some embodiments, the enhancement layer decoder 502 can decode at least a portion of the encoded video stream 112 into the prediction residue of the UHDTV video frame. The enhancement layer decoder 502 can generate a same or a similar prediction of the UHDTV image frame that was generated by the video encoder 300 during the encoding process, and then combine the prediction with the prediction residue to generate the decoded UHDTV video stream 122. The enhancement layer decoder 502 can generate the prediction of the UHDTV image frame through motion compensation prediction, intra-frame prediction, or scaled color prediction from a BT.709 image frame decoded in the base layer decoder 504. Embodiments of video encoder 400 will be described below in greater detail.

Although Figure 1 shows color prediction-based video coding of an UHDTV video stream and a BT.709 video stream with video encoder 300 and video decoder 500, in some embodiments, any video streams representing different color gamuts can be encoded or decoded with color prediction-based video coding.

Figure 2 is an example graph 200 illustrating color gamuts supported in a BT.709 video standard and in a UHDTV video standard. Referring to Figure 2, the graph 200 shows a two-dimensional representation of color gamuts in an International Commission on Illumination (CIE) 1931 chrominance xy diagram format. The graph 200 includes a standard observer color gamut 210 to represent a range of colors viewable by a standard human observer as determined by the CIE in 1931. The graph 200 includes a UHDTV color gamut 220 to represent a range of colors supported the UHDTV video standard. The graph 200 includes a BT.709 color gamut 230 to represent a range of colors supported the BT.709 video standard, which is narrower than the UHDTV color gamut 220. The graph also includes a point that represents the color white 240, which is included in the standard observer color gamut 210, the UHDTV color gamut 220, and the BT.709 color gamut 230.

Figures 3A and 3B and 3C are block diagram examples of the video encoder 300 shown in Figure 1. Referring to Figure 3A, the video encoder 300 can include an enhancement layer encoder 302 and a base layer encoder 304. The base layer encoder 304 can include a video input 362 to receive a BT.709 video stream 104 having HD image frames. The base layer encoder 304 can include an encoding prediction loop 364 to encode the BT.709 video stream 104 received from the video input 362, and store the reconstructed frames of the BT.709 video stream in a reference buffer 368. The reference buffer 368 can provide the reconstructed BT.709 image frames back to the encoding prediction loop 364 for use in encoding other portions of the same frame or other frames of the BT.709 video stream 104. The reference buffer 368 can store the image frames encoded by the encoding prediction loop 364. The base layer encoder 304 can include entropy encoding function 366 to perform entropy encoding operations on the encoded-version of the BT.709 video stream from the encoding prediction loop 364 and provide an entropy encoded stream to an output interface 380.

The enhancement layer encoder 302 can include a video input 310 to receive a UHDTV video stream 102 having UHDTV image frames. The enhancement layer encoder 302 can generate a prediction of the UHDTV image frames and utilize the prediction to generate a prediction residue, for example, a difference between the prediction and the UHDTV image frames determined with a combination function 315. In some embodiments, the combination function 315 can include weighting, such as linear weighting, to generate the prediction residue from the prediction of the UHDTV image frames. The enhancement layer encoder 302 can transform and quantize the prediction residue with a transform and quantize function 320. An entropy encoding function 330 can encode the output of the transform and quantize function 320, and provide an entropy encoded stream to the output interface 380. The output interface 380 can multiplex the entropy encoded streams from the entropy encoding functions 366 and 330 to generate the encoded video stream 112.

The enhancement layer encoder 302 can include a color space predictor 400, a motion compensation prediction function 354, and an intra predictor 356, each of which can generate a prediction of the UHDTV image frames. The enhancement layer encoder 302 can include a prediction selection function 350 to select a prediction generated by the color space predictor 400, the motion compensation prediction function 354, and/or the intra predictor 356 to provide to the combination function 315.

In some embodiments, the motion compensation prediction function 354 and the intra predictor 356 can generate their respective predictions based on UHDTV image frames having previously been encoded and decoded by the enhancement layer encoder 302. For example, after a prediction residue has been transformed and quantized, the transform and quantize function 320 can provide the transformed and quantized prediction residue to a scaling and inverse transform function 322, the result of which can be combined in a combination function 325 with the prediction utilized to generate the prediction residue and generate a decoded UHDTV image frame. The combination function 325 can provide the decoded UHDTV image frame to a deblocking function 351, and the deblocking function 351 can store the decoded UHDTV image frame in a reference buffer 340, which holds the decoded UHDTV image frame for use by the motion compensation prediction function 354 and the intra predictor 356. In some embodiments, the deblocking function 351 can filter the decoded UHDTV image frame, for example, to smooth sharp edges in the image between macroblocks corresponding to the decoded UHDTV image frame.

The motion compensation prediction function 354 can receive one or more decoded UHDTV image frames from the reference buffer 340. The motion compensation prediction function 354 can generate a prediction of a current UHDTV image frame based on image motion between the one or more decoded UHDTV image frames from the reference buffer 340 and the UHDTV image frame.

The intra predictor 356 can receive a first portion of a current UHDTV image frame from the reference buffer 340. The intra predictor 356 can generate a prediction corresponding to a first portion of a current UHDTV image frame based on at least a second portion of the current UHDTV image frame having previously been encoded and decoded by the enhancement layer encoder 302.

The color space predictor 400 can generate a prediction of the UHDTV image frames based on BT.709 image frames having previously been encoded by the base layer encoder 304. In some embodiments, the reference buffer 368 in the base layer encoder 304 can provide the reconstructed BT.709 image frame to a resolution upscaling function 370, which can scale the resolution of the reconstructed BT.709 image frame to a resolution that corresponds to the UHDTV video stream 102. The resolution upscaling function 370 can provide an upscaled resolution version of the reconstructed BT.709 image frame to the color space predictor 400. The color space predictor can generate a prediction of the UHDTV image frame based on the upscaled resolution version of the reconstructed BT.709 image frame in Fig.3A. In some embodiments, the color space predictor 400 can scale a YUV color space of the upscaled resolution version of the reconstructed BT.709 image frame to correspond to the YUV representation supported by the UHDTV video stream 102 in Fig.3B. In some embodiments, the upscaling and color prediction are done jointly. The reference buffer 368 in the base layer encoder 304 can provide reconstructed BT.709 images frames to the joint upscaler color predictor. The joint resolution upscaling and color space predictor 375 generates an upscaled and color prediction of the UHDTV image frame in Fig.3C. The combined upscaler and color prediction functions enable reduced complexity as well as avoiding loss of precision resulting from limited bit-depth between the separate upscaler and the color prediction modules.

There are several ways for the color space predictor 400 to scale the color space supported by BT.709 video coding standard to a color space supported by the UHDTV video stream 102, such as independent channel prediction and affine mixed channel prediction. Independent channel prediction can include converting each portion of the YUV color space for the BT.709 image frame separately into the prediction of the UHDTV image frame. The Y portion or luminance can be scaled according to Equation 1:

$$Y_{UHDTV} = g_1 \cdot Y_{BT.709} + o_1 \quad (\text{Equation 1})$$

The U portion or one of the chrominance portions can be scaled according to Equation 2:

$$U_{UHDTV} = g_2 \cdot U_{BT.709} + o_2 \quad (\text{Equation 2})$$

The V portion or one of the chrominance portions can be scaled according to Equation 3:

$$V_{UHDTV} = g_3 \cdot V_{BT.709} + o_3 \quad (\text{Equation 3})$$

The gain parameters g1, g2, and g3 and the offset parameters o1, o2, and o3 can be based on differences in the color space supported by the BT.709 video coding standard and the UHDTV video standard, and may vary depending on the content of the respective BT.709 image frame and UHDTV image frame. The enhancement layer encoder 302 can output the gain parameters g1, g2, and g3 and the offset parameters o1, o2, and o3 utilized by the color space predictor 400 to generate the prediction of the UHDTV image frame to the video decoder 500 as the color prediction parameters 114, for example, via the output interface 380.

In some embodiments, the independent channel prediction can include gain parameters g1, g2, and g3, and zero parameters. The Y portion or luminance can be scaled according to Equation 4:

$$Y_{UHDTV} = g_1 \cdot \left(Y_{BT.709} - Yzero_{BT.709}\right) + Yzero_{UHDTV} \quad (\text{Equation 4})$$

The U portion or one of the chrominance portions can be scaled according to Equation 5:

$$U_{UHDTV} = g_2 \cdot \left(U_{BT.709} - Uzero_{BT.709}\right) + Uzero_{UHDTV} \quad (\text{Equation 5})$$

The V portion or one of the chrominance portions can be scaled according to Equation 6:

$$V_{UHDTV} = g_3 \cdot \left(V_{BT.709} - Vzero_{BT.709}\right) + Vzero_{UHDTV} \quad (\text{Equation 6})$$

The gain parameters g1, g2, and g3 can be based on differences in the color space supported by the BT.709 video coding standard and the UHDTV video standard, and may vary depending on the content of the respective BT.709 image frame and UHDTV image frame. The enhancement layer encoder 302 can output the gain parameters g1, g2, and g3 utilized by the color space predictor 400 to generate the prediction of the UHDTV image frame to the video decoder 500 as the color prediction parameters 114, for example, via the output interface 380. Since the video decoder 500 can be preloaded with the zero parameters, the video encoder 300 can generate and transmit fewer color prediction parameters 114, for example, three instead of six, to the video decoder 500.

In some embodiments, the zero parameters used in Equations 4-6 can be defined based on the bit-depth of the relevant color space and color channel. For example, in Table 1, the zero parameters can be defined as follows:

Table 1

| $Yzero_{BT.709} = 0$ | $Yzero_{UHDTV} = 0$ |
|---|---|
| $Uzero_{BT.709} = (1 << bits_{BT.709})$ | $Uzero_{UHDTV} = (1 << bits_{UHDTV})$ |
| $Vzero_{BT.709} = (1 << bits_{BT.709})$ | $Vzero_{UHDTV} = (1 << bits_{UHDTV})$ |

The affine mixed channel prediction can include converting the YUV color space for a BT.709 image frame by mixing the YUV channels of the BT.709 image frame to generate a prediction of the UHDTV image frame, for example, through a matrix multiplication function. In some embodiments, the color space of the BT.709 can be scaled according to Equation 7:

$$\begin{pmatrix} Y \\ U \\ V \end{pmatrix}_{UHDTV} = \begin{pmatrix} m_{11} & m_{12} & m_{13} \\ m_{21} & m_{22} & m_{23} \\ m_{31} & m_{32} & m_{33} \end{pmatrix} \cdot \begin{pmatrix} Y \\ U \\ V \end{pmatrix}_{BT.709} + \begin{pmatrix} o_1 \\ o_2 \\ o_3 \end{pmatrix} \quad (\text{Equation } 7)$$

The matrix parameters m11, m12, m13, m21, m22, m23, m31, m32, and m33 and the offset parameters o1, o2, and o3 can be based on the difference in color space supported by the BT.709 video format recommendation and the UHDTV video format recommendation, and may vary depending on the content of the respective BT.709 image frame and UHDTV image frame. The enhancement layer encoder 302 can output the matrix and offset parameters utilized by the color space predictor 400 to generate the prediction of the UHDTV image frame to the video decoder 500 as the color prediction parameters 114, for example, via the output interface 380.

In some embodiments, the color space of the BT.709 can be scaled according to Equation 8:

$$\begin{pmatrix} Y \\ U \\ V \end{pmatrix}_{UHDTV} = \begin{pmatrix} m_{11} & m_{12} & m_{13} \\ 0 & m_{22} & 0 \\ 0 & 0 & m_{33} \end{pmatrix} \cdot \begin{pmatrix} Y \\ U \\ V \end{pmatrix}_{BT.709} + \begin{pmatrix} o_1 \\ o_2 \\ o_3 \end{pmatrix} \quad (\text{Equation } 8)$$

The matrix parameters m11, m12, m13, m22, and m33 and the offset parameters o1, o2, and o3 can be based on the difference in color space supported by the BT.709 video coding standard and the UHDTV video standard, and may vary depending on the content of the respective BT.709 image frame and UHDTV image frame. The enhancement layer encoder 302 can output the matrix and offset parameters utilized by the color space predictor 400 to generate the prediction of the UHDTV image frame to the video decoder 500 as the color prediction parameters 114, for example, via the output interface 380.

By replacing the matrix parameters m21, m23, m31, and m32 with zero, the luminance channel Y of the UHDTV image frame prediction can be mixed with the color channels U and V of the BT.709 image frame, but the color channels U and V of the UHDTV image frame prediction may not be mixed with the luminance channel Y of the BT.709 image frame. The selective channel mixing can allow for a more accurate prediction of the luminance channel UHDTV image frame prediction, while reducing a number of prediction parameters 114 to transmit to the video decoder 500.

In some embodiments, the color space of the BT.709 can be scaled according to Equation 9:

$$\begin{pmatrix} Y \\ U \\ V \end{pmatrix}_{UHDTV} = \begin{pmatrix} m_{11} & m_{12} & m_{13} \\ 0 & m_{22} & m_{23} \\ 0 & m_{32} & m_{33} \end{pmatrix} \cdot \begin{pmatrix} Y \\ U \\ V \end{pmatrix}_{BT.709} + \begin{pmatrix} o_1 \\ o_2 \\ o_3 \end{pmatrix} \quad (\text{Equation 9})$$

The matrix parameters m11, m12, m13, m22, m23, m32, and m33 and the offset parameters o1, o2, and o3 can be based on the difference in color space supported by the BT.709 video standard and the UHDTV video standard, and may vary depending on the content of the respective BT.709 image frame and UHDTV image frame. The enhancement layer encoder 302 can output the matrix and offset parameters utilized by the color space predictor 400 to generate the prediction of the UHDTV image frame to the video decoder 500 as the color prediction parameters 114, for example, via the output interface 380.

By replacing the matrix parameters m21 and m31 with zero, the luminance channel Y of the UHDTV image frame prediction can be mixed with the color channels U and V of the BT.709 image frame. The U and V color channels of the UHDTV image frame prediction can be mixed with the U and V color channels of the BT.709 image frame, but not the luminance channel Y of the BT.709 image frame. The selective channel mixing can allow for a more accurate prediction of the luminance channel UHDTV image frame prediction, while reducing a number of prediction parameters 114 to transmit to the video decoder 500.

The color space predictor 400 can generate the scaled color space predictions for the prediction selection function 350 on a per sequence (inter-frame), a per frame, or a per slice (intra-frame) basis, and the video encoder 300 can transmit the prediction parameter 114 corresponding to the scaled color space predictions on a per sequence (inter-frame), a per frame, or a per slice (intra-frame) basis. In some embodiments, the granularity for generating the scaled color space predictions can be preset or fixed in the color space predictor 400 or dynamically adjustable by the video encoder 300 based on encoding function or the content of the UHDTV image frames.

The video encoder 300 can transmit the color prediction parameters 114 in a normative portion of the encoded video stream 112, for example, in a Sequence Parameter Set (SPS), a Picture Parameter Set (PPS), or another lower level section of the normative portion of the encoded video stream 112. In some embodiments, the color prediction parameters 114 can be inserted into the encoded video stream 112 with a syntax that allows the video decoder 500 to identify that the color prediction parameters 114 are present in the encoded video stream 112, to identify a precision or size of the parameters, such as a number of bits utilized to represent each parameter, and identify a type of color space prediction the color space predictor 400 of the video encoder 300 utilized to generate the color space prediction.

In some embodiments, the normative portion of the encoded video stream 112 can include a flag (use_color_space_prediction), for example, one or more bits, which can annunciate an inclusion of color space parameters 114 in the encoded video stream 112. The normative portion of the encoded video stream 112 can include a size parameter (color_predictor_num_fraction_bits_minus1), for example, one or more bits, which can identify a number of bits or precision utilized to represent each parameter. The normative portion of the encoded video stream 112 can include a predictor type parameter (color_predictor_idc), for example, one or more bits, which can identify a type of color space prediction utilized by the video encoder 300 to generate the color space prediction. The types of color space prediction can include independent channel prediction, affine prediction, their various implementations, or the like. The color prediction parameters 114 can include gain parameters, offset parameters, and/or matrix parameters depending on the type of prediction utilized by the video encoder 300.

Referring to Figure 3B, a video encoder 301 can be similar to video encoder 300 shown and described above in Figure 3A with the following differences. The video encoder 301 can switch the color space predictor 400 with the resolution upscaling function 370. The color space predictor 400 can generate a prediction of the UHDTV image frames based on BT.709 image frames having previously been encoded by the base layer encoder 304.

In some embodiments, the reference buffer 368 in the base layer encoder 304 can provide the encoded BT.709 image frame to the color space predictor 400. The color space predictor can scale a YUV color space of the encoded BT.709 image frame to correspond to the YUV representation supported by the UHDTV video format. The color space predictor 400 can provide the color space prediction to a resolution upscaling function 370, which can scale the resolution of the color space prediction of the encoded BT.709 image frame to a resolution that corresponds to the UHDTV video format. The resolution upscaling function 370 can provide a resolution upscaled color space prediction to the prediction selection function 350.

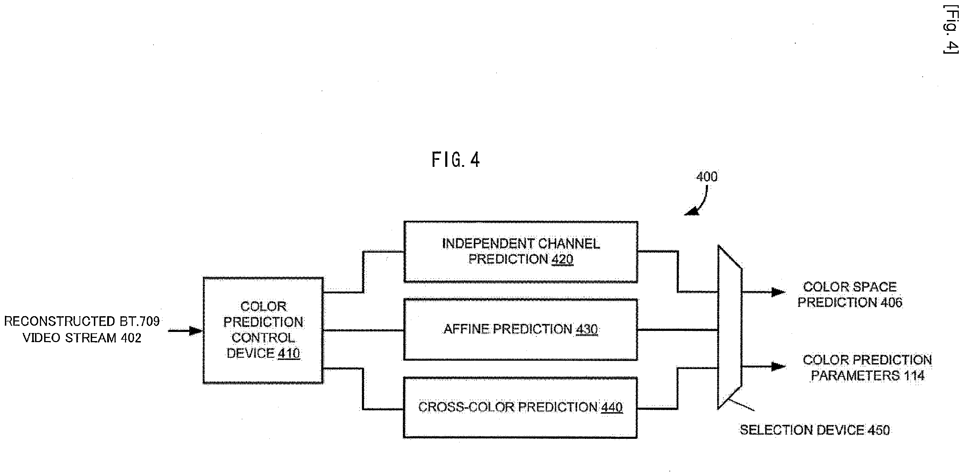

Figure 4 is a block diagram example of the color space predictor 400 shown in Figure 3A. Referring to Figure 4, the color space predictor 400 can include a color space prediction control device 410 to receive a reconstructed BT.709 video frame 402, for example, from a base layer encoder 304 via a resolution upscaling function 370, and select a prediction type and timing for a generation for a color space prediction 406. In some embodiments, the color space prediction control device 410 can pass the reconstructed BT.709 video frame 402 to at least one of an independent channel prediction function 420, an affine prediction function 430, or a cross-color prediction function 440. Each of the

8

prediction functions 420, 430, and 440 can generate a color space prediction of a UHDTV image frame (or portion thereof) from the reconstructed BT.709 video frame 402, for example, by scaling the color space of a BT.709 image frame to a color space of the UHDTV image frame.

The independent color channel prediction function 420 can scale YUV components of the reconstructed BT.709 video stream 402 separately, for example, as shown above in Equations 1-6. The affine prediction function 430 can scale YUV components of the reconstructed BT.709 video frame 402 with a matrix multiplication, for example, as shown above in Equation 7. The cross-color prediction function 440 can scale YUV components of the reconstructed BT.709 video stream 402 with a modified matrix multiplication that can eliminate mixing of a Y component from the reconstructed BT.709 video stream 402 when generating the U and V components of the UHDTV image frame, for example, as shown above in Equations 8 or 9.

In some embodiments, the color space predictor 400 can include a selection device 450 to select an output from the independent color channel prediction function 420, the affine prediction function 430, and the cross-color prediction function 440. The selection device 450 also can output the color prediction parameters 114 utilized to generate the color space prediction 406. The color prediction control device 410 can control the timing of the generation of the color space prediction 406 and the type of operation performed to generate the color space prediction 406, for example, by controlling the timing and output of the selection device 450. In some embodiments, the color prediction control device 410 can control the timing of the generation of the color space prediction 406 and the type of operation performed to generate the color space prediction 406 by selectively providing the reconstructed BT.709 video stream 402 to at least one of the independent color channel prediction function 420, the affine prediction function 430, and the cross-color prediction function 440.

Figures 5A and 5B and 5C are block diagram examples of the video decoder 500 shown in Figure 1. Referring to Figure 5A, the video decoder can include an interface 510 to receive the encoded video stream 112, for example, from a video encoder 300. The interface 510 can demultiplex the encoded video stream 112 and provide encoded UHDTV image data to an enhancement layer decoder 502 of the video decoder 500 and provide encoded BT.709 image data to a base layer decoder 504 of the video decoder 500. The base layer decoder 504 can include an entropy decoding function 552 and a decoding prediction loop 554 to decode encoded BT.709 image data received from the interface 510, and store the decoded BT.709 video stream 124 in a reference buffer 556. The reference buffer 556 can provide the decoded BT.709 video stream 124 back to the decoding prediction loop 554 for use in decoding other portions of the same frame or other frames of the encoded BT.709 image data. The base layer decoder 504 can output the decoded BT.709 video stream 124. In some embodiments, the output from the decoding prediction loop 554 and input to the reference buffer 556 may be residual frame data rather than the reconstructed frame data.

The enhancement layer decoder 502 can include an entropy decoding function 522, a inverse quantization function 524, an inverse transform function 526, and a combination function 528 to decode the encoded UHDTV image data received from the interface 510. A deblocking function 541 can filter the decoded UHDTV image frame, for example, to smooth sharp edges in the image between macroblocks corresponding to the decoded UHDTV image frame, and store the decoded UHDTV video stream 122 in a reference buffer 530. In some embodiments, the encoded UHDTV image data can correspond to a prediction residue, for example, a difference between a prediction and a UHDTV image frame as determined by the video encoder 300. The enhancement layer decoder 502 can generate a prediction of the UHDTV image frame, and the combination function 528 can add the prediction of the UHDTV image frame to encoded UHDTV image data having undergone entropy decoding, inverse quantization, and an inverse transform to generate the decoded UHDTV video stream 122. In some embodiments, the combination function 528 can include weighting, such as linear weighting, to generate the decoded UHDTV video stream 122.

The enhancement layer decoder 502 can include a color space predictor 600, a motion compensation prediction function 542, and an intra predictor 544, each of which can generate the prediction of the UHDTV image frame. The enhancement layer decoder 502 can include a prediction selection function 540 to select a prediction generated by the color space predictor 600, the motion compensation prediction function 542, and/or the intra predictor 544 to provide to the combination function 528.

In some embodiments, the motion compensation prediction function 542 and the intra predictor 544 can generate their respective predictions based on UHDTV image frames having previously been decoded by the enhancement layer decoder 502 and stored in the reference buffer 530. The motion compensation prediction function 542 can receive one or more decoded UHDTV image frames from the reference buffer 530. The motion compensation prediction function 542 can generate a prediction of a current UHDTV image frame based on image motion between the one or more decoded UHDTV image frames from the reference buffer 530 and the UHDTV image frame.

The intra predictor 544 can receive a first portion of a current UHDTV image frame from the reference buffer 530. The intra predictor 544 can generate a prediction corresponding to a first portion of a current UHDTV image frame based on at least a second portion of the current UHDTV image frame having previously been decoded by the enhancement layer decoder 502.

The color space predictor 600 can generate a prediction of the UHDTV image frames based on BT.709 image frames decoded by the base layer decoder 504. In some embodiments, the reference buffer 556 in the base layer decoder 504 can provide a portion of the decoded BT.709 video stream 124 to a resolution upscaling function 570, which can scale the resolution of the reconstructed BT.709 image frame to a resolution that corresponds to the UHDTV video format. The resolution upscaling function 570 can provide an upscaled resolution version of the reconstructed BT.709 image frame to the color space predictor 600. The color space predictor can generate a prediction of the UHDTV image frame based on the upscaled resolution version of the encoded BT.709 image frame. In some embodiments, the color space predictor 600 can scale a YUV color space of the upscaled resolution version of the reconstructed BT.709 image frame to correspond to the YUV representation supported by the UHDTV video format.

In some embodiments, the upscaling and color prediction are done jointly. The reference buffer 556 in the base layer decoder 504 can provide reconstructed BT.709 images frames to the joint upscaler color predictor 575 in Fig.5C. The joint upscaler color predictor generates an upscaled and color prediction of the UHDTV image frame. The combined upscaler and color prediction functions enable reduced complexity as well as avoiding loss of precision resulting from limited bit-depth between the separate upscaler and the color prediction modules. An example of the combination of upscaling and color prediction may be defined by a sample set of equations. Conventional upsampling implemented by separable filter calculations followed by an independent color prediction. Example calculations are shown below in three steps by equations 10, 11 and 12.

The input samples $x_{i,j}$ are filtered in one direction by taps $a_k$ to give intermediates $y_{i,j}$. An offset, $o_1$, is added and the result is right shifted by the value $s_1$ as in Equation 10:

$$y_{i,j} = \left( \sum_k a_k \cdot x_{i-k,j} + o_1 \right) \gg s_1$$

( Equation 10)

The intermediate samples $y_{i,j}$ are then filtered by taps $b_k$ to give samples $z_{i,j}$ and a second offset, $o_2$, is added and the result is right shifted by a second value, $s_2$ as in Equation 11:

$$z_{i,j} = \left( \sum_k b_k \cdot y_{i,j-k} + o_2 \right) \gg s_2$$

( Equation 11)

The results of the upsampling process $z_{i,j}$ are then processed by the color predition to generate prediction samples $p_{i,j}$. A gain is applied then an offset, $o_3$, is added before a final shift by $s_3$. The color prediction process described in Equation 12:

$$p_{i,j} = \left( gain \cdot z_{i,j} + o_3 \right) \gg s_3$$ ( Equation 12)

The complexity may be reduced by combining the color prediction calculation with the second separable filter calculation. The filter taps $b_k$ of Equation 11 are combined with the gain of Equation 12 to produce new taps $c_k = gain*b_k$ (the symbol * represents 'product') the shift values of Equations 11 and Equation 12 are combined to give a new shift value $s_4 = s_2 + s_3$. The offset of Equation 12 is modified to $o_4 = o_3 \ll s_2$. The individual calculations of Equation 11 and Equation 12 are defined in a single result Equation 13:

$$p_{i,j} = \left( \left( \sum_k c_k \cdot y_{i,j-k} \right) + o_4 \right) \gg s_4$$

( Equation 13)

The combined calculation of Equation 13 has the advantage compared to Equations 11 and Equation 12 of reducing computation by using a single shift rather than two separate shifts and reducing the number of multiplies by premultiplying the filter taps

In some embodiments, it may be desirable to implement the separable filter calculations with equal taps so that $a_k = b_k$ in Equation 10 and Equation 11. Direct application of the combined upscaling and color prediction removes this equality of taps since the values $b_k$ are replaced with the combined values $c_k$ An alternate embodiment will maintain this equality of taps. The gain is represented as a the square of a value r shifted by a factor e in the form gain=(r*r)<<e. Where the value r is represented with m bits.

The results of Equations 10 and Equation 13 may be replaced by the pair of Equation 14 and Equation 15:

$$y_{i,j} = \left( \sum_k r \cdot a_k \cdot x_{i-k,j} + o_5 \right) \gg s_5$$

( Equation 14)

$$p_{i,j} = \left( \left( \sum_k r \cdot a_k \cdot y_{i,j-k} \right) + o_6 \right) \gg s_6$$

( Equation 15)

The offsets and shifts used in Equation 15 and Equation 16 are derived from the values in Equations 10 and Equation 13 and the representation of the gain value as shown in Equation 16:

$$
\begin{aligned}
o_5 &= o_1 \ll m \\
s_5 &= s_1 + m \\
o_6 &= o_4 \ll (m + e) \\
s_6 &= s_4 + m + e
\end{aligned}
$$

( Equation 16)

The filter calculations in Equation 15 and Equation 16 use equal tap values $r^*a_k$. The use of the exponent factor e allows large gain values to be approximated with small values of r by increasing the value of e.

The color space predictor 600 can operate similarly to the color space predictor 400 in the video encoder 300, by scaling the color space supported by BT.709 video coding standard to a color space supported by the UHDTV video format, for example, with independent channel prediction, affine mixed channel prediction, or cross-color channel prediction. The color space predictor 600, however, can select a type of color space prediction to generate based, at least in part, on the color prediction parameters 114 received from the video encoder 300. The color prediction parameters 114 can explicitly identify a particular a type of color space prediction, or can implicitly identify the type of color space prediction, for example, by a quantity and/or arrangement of the color prediction parameters 114.

As discussed above, in some embodiments, the normative portion of the encoded video stream 112 can include a flag (use_color_space_prediction), for example, one or more bits, which can annunciate an inclusion of color space parameters 114 in the encoded video stream 112. The normative portion of the encoded video stream 112 can include a size parameter (color_predictor_num_fraction_bits_minus1), for example, one or more bits, which can identify a number of bits or precision utilized to represent each parameter. The normative portion of the encoded video stream 112 can include a predictor type parameter (color_predictor_idc), for example, one or more bits, which can identify a type of color space prediction utilized by the video encoder 300 to generate the color space prediction. The types of color space prediction can include independent channel prediction, affine prediction, their various implementations, or the like. The color prediction parameters 114 can include gain parameters, offset parameters, and/or matrix parameters depending on the type of prediction utilized by the video encoder 300.

The color space predictor 600 identify whether the video encoder 300 utilize color space prediction in generating then encoded video stream 112 based on the flag (use_color_space_prediction). When color prediction parameters 114 are present in the encoded video stream 112, the color space predictor 600 can parse the color prediction parameters 114 to identify a type of color space prediction utilized by the video encoded based on the predictor type parameter (color_predictor_idc), and a size or precision of the parameters (color_predictor_num_fraction_bits_minus1), and locate the color space parameters to utilize to generate a color space prediction.

For example, the video decoder 500 can determine whether the color prediction parameters 114 are present in the encoded video stream 112 and parse the color prediction parameters 114 based on the following example code in Table 2:

```
use_color_space_prediction
if(use_color_space_prediction) {
    color_predictor_num_fraction_bits_minus1
    color_prediction_idc
    if(color_prediction_idc==0) {
        for( i = 0; i < 3; i++ ){
            color_predictor_gain [ i ]
                }
        }
    if(color_prediction_idc==1) {
        for( i = 0; i < 3; i++ ){
            color_predictor_gain [ i ]
            color_predictor_offset [ i ]
                }
        }
    if(color_prediction_idc==2) {
        for( i = 0; i < 3; i++ ){
            for( j= 0; j < 3; j++ ){
                cross_color_predictor_gain [ i ][j]
                    }
            color_predictor_offset [ i ]
                }
        }
```

Table 2

The example code in Table 2 can allow the video decoder 500 to identify whether color prediction parameters 114 are present in the encoded video stream 112 based on the use_color_space_prediction flag. The video decoder 500 can identify the precision or size of the color space parameters based on the size parameter (color_predictor_num_fraction_bits_minus1), and can identify a type of color space prediction utilized by the video encoder 300 based on the type parameter (color_predictor_idc). The example code in Table 2 can allow the video decoder 500 to parse the color space parameters from the encoded video stream 112 based on the identified size of the color space parameters and the identified type color space prediction utilized by the video encoder 300, which can identify the number, semantics, and location of the color space parameters. Although the example code in Table 2 shows the affine prediction including 9 matrix parameters and 3 offset parameters (color_prediction_idc=2), in some embodiments, the color prediction parameters 114 can include fewer matrix and/or offset parameters, for example, when the matrix parameters are zero, and the example code can be modified to parse the color prediction parameters 114 accordingly.

An alternate method for signaling the color prediction parameters is described here. The structure of the Picture Parameter Set (PPS) of HEVC is shown in the table below:

| pic_parameter_set_rbsp() { | Descriptor |
|---|---|
| pic_parameter_set_id | ue(v) |
| seq_parameter_set_id | ue(v) |
| sign_data_hiding_flag | u(1) |
| cabac_init_present_flag | u(1) |

(continued)

| | |
|---|---|
| **num_ref_idx_l0_default_active_minus1** | ue(v) |
| **num_ref_idx_l1_default_active_minus1** | ue(v) |
| **pic_init_qp_minus26** | se(v) |
| **constrained_intra_pred_flag** | u(1) |
| **transform_skip_enabled_flag** | u(1) |
| **cu_qp_delta_enabled_flag** | u(1) |
| if ( cu_qp_delta_enabled_flag) | |
| **diff_cu_qp_delta_depth** | ue(v) |
| **pic_cb_qp_offset** | se(v) |
| **pic_cr_qp_offset** | se(v) |
| **pic_slice_level_chroma_qp_offsets_flag** | u(1) |
| **weighted_pred_flag** | u(1) |
| **weighted_bipred_flag** | u(1) |
| **output_flag_present_flag** | u(1) |
| **transquant_bypass_enable_flag** | u(1) |
| **dependent_slice_enabled_flag** | u(1) |
| **tiles_enabled_flag** | u(1) |
| **entropy_coding_sync_enabled_flag** | u(1) |
| **entropy_slice_enabled_flag** | u(1) |
| if( tiles_enabled_flag) { | |
| **num_tile_columns_minus1** | ue(v) |
| **num_tile_rows_minus 1** | ue(v) |
| **uniform_spacing_flag** | u(1) |
| if( !uniform_spacing_flag) { | |
| for(i = 0; i < num_tile_columns_minus1; i++ ) | |
| **column_width_minus1[ i ]** | ue(v) |
| for(i = 0; i < num_tile_rows_minus1; i++) | |
| **row_height_minus1[i]** | ue(v) |
| } | |
| **loop_filter_across_tiles_enabled_flag** | u(1) |
| **}** | |
| **loop_filter_across_slices_enabled_flag** | u(1) |
| **deblocking_filter_control_present_flag** | u(1) |
| if( deblocking_filter_control_present_flag) { | |
| **deblocking_filter_override_enabled_flag** | u(1) |
| **pps_disable_deblocking_filter_flag** | u(1) |
| if( !pps_disable_deblocking_filter_flag) { | |
| **beta_offset_div2** | se(v) |
| **tc_offset_div2** | se(v) |

(continued)

| | |
|---|---|
| } | |
| } | |
| **pps_scaling_list_data_present_flag** | u(1) |
| if( pps_scaling_list_data_present_flag) | |
| scaling_list_data( ) | |
| **log2_parallel_merge_level_minus2** | ue(v) |
| **slice_header_extension_present_flag** | u(1) |
| **slice_extension_present_flag** | u(1) |
| **pps_extension_flag** | u(1) |
| if( pps_extension_flag) | |
| while( more_rbsp_data()) | |
| **pps_extension_data_flag** | u(1) |
| rbsp_trailing_bits() | |
| } | |

Additional fields to carry color prediction data are added when the pps_extension_flag is set.

In extension data signal the following:

A flag to use color prediction on the current picture

Indicator of color prediction model used to signal gain and offset values.

| Color_prediction_model | index |
|---|---|
| Bit Increment | 0 |
| Fixed Gain Offset | 1 |
| Picture Adaptive Gain Offset | 2 |

For each model the following values are signaled or derived: number_gain_fraction_bits, gain[] and offset[] values for each color component.

Bit Increment (BI) model: the number of fraction bits is zero, the gain values are equal and based on the difference in bit-depth between base and enhancement layer i.e. 1<<(bit_depth_EL_bit_depth_BL), all offset values are zero.

Fixed Gain Offset model: an index is signaled indicating the use of a set of parameters signaled previously for instance out of band or through a predefined table of parameter values. This index indicates a previously define set of values including: number of fraction bits, gain and offset values for all components. These values are not signaled but reference to a predefined set. If only a single set of parameters is predefined, an index is not sent and this set is used when the Fixed Gain Offset model is used.

Picture Adaptive Gain Offset Offset model: parameter values are signaled in the bitstream through the following fields. Number of fraction bits is signaled as an integer in a predefined range i.e. 0-5. For each channel gain and offset values are signaled as integers. An optional method is to signal the difference between the Fixed Gain Offset model and the parameter values of the Dynamic Gain Offset model.

Each layer will may have independently specified color space for instance using the HEVC Video Usability Information (VUI) with colour_description_present_flag indicating the presence of colour information. As an example, separate VUI fields can be specified for each layer through different Sequence Parameter Sets.

The color space predictor 600 can generate color space predictions for the prediction selection function 540 on a per sequence (inter-frame), a per frame, or a per slice (intra-frame) basis. In some embodiments, the color space predictor 600 can generate the color space predictions with a fixed or preset timing or dynamically in response to a reception of the color prediction parameters 114 from the video encoder 300.

Referring to Figure 5B, a video decoder 501 can be similar to video decoder 500 shown and described above in Figure 5A with the following differences. The video decoder 501 can switch the color space predictor 600 with the resolution upscaling function 570. The color space predictor 600 can generate a prediction of the UHDTV image frames based on portions of the decoded BT.709 video stream 124 from the base layer decoder 504.

In some embodiments, the reference buffer 556 in the base layer decoder 504 can provide the portions of the decoded BT.709 video stream 124 to the color space predictor 600. The color space predictor 600 can scale a YUV color space of the portions of the decoded BT.709 video stream 124 to correspond to the YUV representation supported by the UHDTV video standard. The color space predictor 600 can provide the color space prediction to a resolution upscaling function 570, which can scale the resolution of the color space prediction to a resolution that corresponds to the UHDTV video standard. The resolution upscaling function 570 can provide a resolution upscaled color space prediction to the prediction selection function 540.

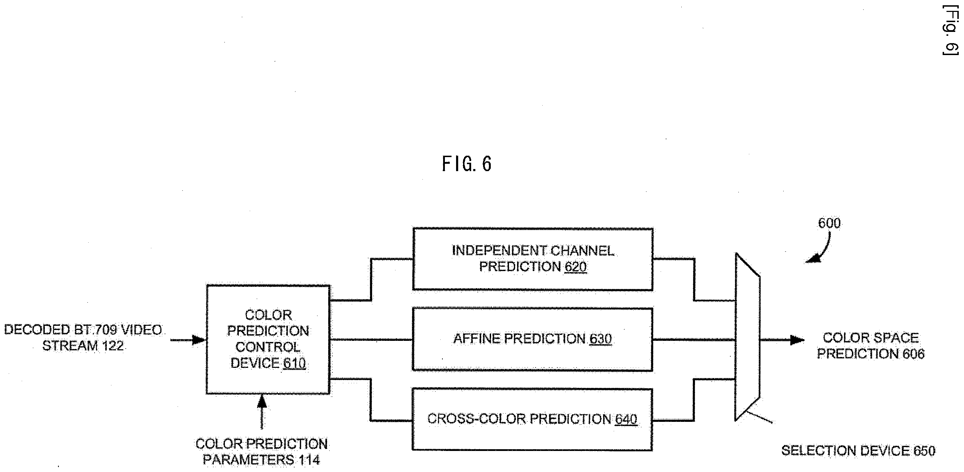

Figure 6 is a block diagram example of a color space predictor 600 shown in Figure 5A. Referring to Figure 6, the color space predictor 600 can include a color space prediction control device 610 to receive the decoded BT.709 video stream 122, for example, from a base layer decoder 504 via a resolution upscaling function 570, and select a prediction type and timing for a generation for a color space prediction 606. The color space predictor 600 can select a type of color space prediction to generate based, at least in part, on the color prediction parameters 114 received from the video encoder 300. The color prediction parameters 114 can explicitly identify a particular a type of color space prediction, or can implicitly identify the type of color space prediction, for example, by a quantity and/or arrangement of the color prediction parameters 114. In some embodiments, the color space prediction control device 610 can pass the decoded BT.709 video stream 122 and color prediction parameters 114 to at least one of an independent channel prediction function 620, an affine prediction function 630, or a cross-color prediction function 640. Each of the prediction functions 620, 630, and 640 can generate a color space prediction of a UHDTV image frame (or portion thereof) from the decoded BT.709 video stream 122, for example, by scaling the color space of a BT.709 image frame to a color space of the UHDTV image frame based on the color space parameters 114.

The independent color channel prediction function 620 can scale YUV components of the decoded BT.709 video stream 122 separately, for example, as shown above in Equations 1-6. The affine prediction function 630 can scale YUV components of the decoded BT.709 video stream 122 with a matrix multiplication, for example, as shown above in Equation 7. The cross-color prediction function 640 can scale YUV components of the decoded BT.709 video stream 122 with a modified matrix multiplication that can eliminate mixing of a Y component from the decoded BT.709 video stream 122 when generating the U and V components of the UHDTV image frame, for example, as shown above in Equations 8 or 9.

In some embodiments, the color space predictor 600 can include a selection device 650 to select an output from the independent color channel prediction function 620, the affine prediction function 630, and the cross-color prediction function 640. The color prediction control device 610 can control the timing of the generation of the color space prediction 606 and the type of operation performed to generate the color space prediction 606, for example, by controlling the timing and output of the selection device 650. In some embodiments, the color prediction control device 610 can control the timing of the generation of the color space prediction 606 and the type of operation performed to generate the color space prediction 606 by selectively providing the decoded BT.709 video stream 122 to at least one of the independent color channel prediction function 620, the affine prediction function 630, and the cross-color prediction function 640.

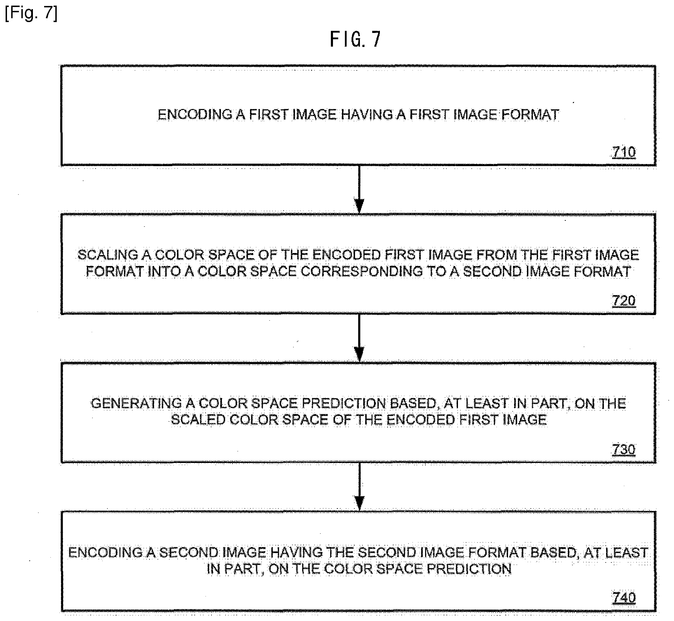

Figure 7 is an example operational flowchart for color space prediction in the video encoder 300. Referring to Figure 7, at a first block 710, the video encoder 300 can encode a first image having a first image format. In some embodiments, the first image format can correspond to a BT.709 video standard and the video encoder 300 can include a base layer to encode BT.709 image frames.

At a block 720, the video encoder 300 can scale a color space of the first image from the first image format into a color space corresponding to a second image format. In some embodiments, the video encoder 300 can scale the color space between the BT.709 video standard and an Ultra High Definition Television (UHDTV) video standard corresponding to the second image format.

There are several ways for the video encoder 300 to scale the color space supported by BT.709 video coding standard to a color space supported by the UHDTV video format, such as independent channel prediction and affine mixed channel prediction. For example, the independent color channel prediction can scale YUV components of encoded BT.709 image frames separately, for example, as shown above in Equations 1-6. The affine mixed channel prediction can scale YUV components of the encoded BT.709 image frames with a matrix multiplication, for example, as shown above in Equations 7-9.

In some embodiments, the video encoder 300 can scale a resolution of the first image from the first image format into a resolution corresponding to the second image format. For example, the UHDTV video standard can support a 4k (3840x2160 pixels) or an 8k (7680x4320 pixels) resolution and a 10 or 12 bit quantization bit-depth. The BT.709 video standard can support a 2k (1920x1080 pixels) resolution and an 8 or 10 bit quantization bit-depth. The video encoder 300 can scale the encoded first image from a resolution corresponding to the BT.709 video standard into a resolution corresponding to the UHDTV video standard.

At a block 730, the video encoder 300 can generate a color space prediction based, at least in part, on the scaled color space of the first image. The color space prediction can be a prediction of a UHDTV image frame (or portion thereof) from a color space of a corresponding encoded BT.709 image frame. In some embodiments, the video encoder 300 can generate the color space prediction based, at least in part, on the scaled resolution of the first image.

At a block 740, the video encoder 300 can encode a second image having the second image format based, at least in part, on the color space prediction. The video encoder 300 can output the encoded second image and color prediction parameters utilized to scale the color space of the first image to a video decoder.

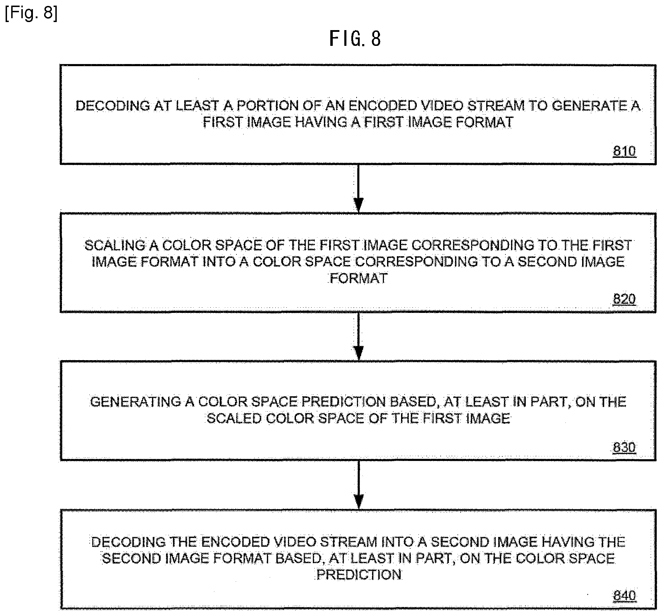

Figure 8 is an example operational flowchart for color space prediction in the video decoder 500. Referring to Figure 8, at a first block 810, the video decoder 500 can decode an encoded video stream to generate a first image having a first image format. In some embodiments, the first image format can correspond to a BT.709 video standard and the video decoder 500 can include a base layer to decode BT.709 image frames.

At a block 820, the video decoder 500 can scale a color space of the first image corresponding to the first image format into a color space corresponding to a second image format. In some embodiments, the video decoder 500 can scale the color space between the BT.709 video standard and an Ultra High Definition Television (UHDTV) video standard corresponding to the second image format.

There are several ways for the video decoder 500 to scale the color space supported by BT.709 video coding standard to a color space supported by the UHDTV video standard, such as independent channel prediction and affine mixed channel prediction. For example, the independent color channel prediction can scale YUV components of the encoded BT.709 image frames separately, for example, as shown above in Equations 1-6. The affine mixed channel prediction can scale YUV components of the encoded BT.709 image frames with a matrix multiplication, for example, as shown above in Equations 7-9.

The video decoder 500 can select a type of color space scaling to perform, such as independent channel prediction or one of the varieties of affine mixed channel prediction based on channel prediction parameters the video decoder 500 receives from the video encoder 300. In some embodiments, the video decoder 500 can perform a default or preset color space scaling of the decoded BT.709 image frames.

In some embodiments, the video decoder 500 can scale a resolution of the first image from the first image format into a resolution corresponding to the second image format. For example, the UHDTV video standard can support a 4k (3840x2160 pixels) or an 8k (7680x4320 pixels) resolution and a 10 or 12 bit quantization bit-depth. The BT.709 video standard can support a 2k (1920x1080 pixels) resolution and an 8 or 10 bit quantization bit-depth. The video decoder 500 can scale the decoded first image from a resolution corresponding to the BT.709 video standard into a resolution corresponding to the UHDTV video standard.

At a block 830, the video decoder 500 can generate a color space prediction based, at least in part, on the scaled color space of the first image. The color space prediction can be a prediction of a UHDTV image frame (or portion thereof) from a color space of a corresponding decoded BT.709 image frame. In some embodiments, the video decoder 500 can generate the color space prediction based, at least in part, on the scaled resolution of the first image.

At a block 840, the video decoder 500 can decode the encoded video stream into a second image having the second image format based, at least in part, on the color space prediction. In some embodiments, the video decoder 500 can utilize the color space prediction to combine with a portion of the encoded video stream corresponding to a prediction residue from the video encoder 300. The combination of the color space prediction and the decoded prediction residue can correspond to a decoded UHDTV image frame or portion thereof.

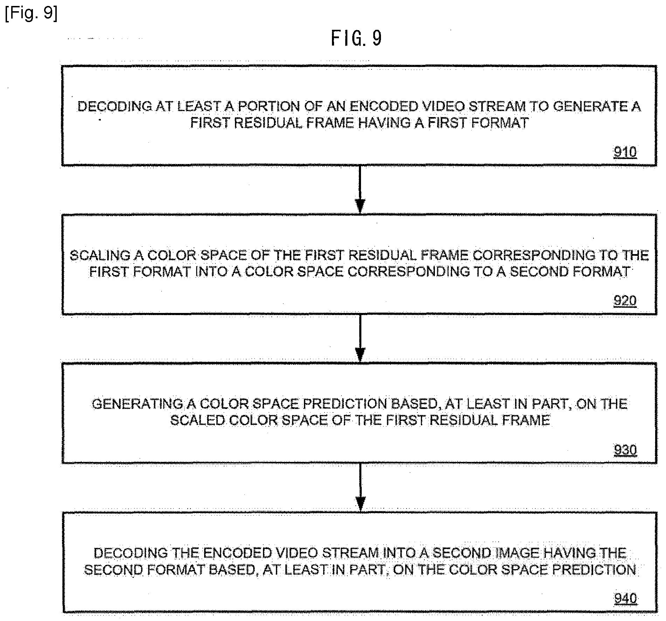

Figure 9 is another example operational flowchart for color space prediction in the video decoder 500. Referring to Figure 9, at a first block 910, the video decoder 500 can decode at least a portion of an encoded video stream to generate a first residual frame having a first format. The first residual frame can be a frame of data corresponding to a difference between two image frames. In some embodiments, the first format can correspond to a BT.709 video standard and the video decoder 500 can include a base layer to decode BT.709 image frames.

At a block 920, the video decoder 500 can scale a color space of the first residual frame corresponding to the first format into a color space corresponding to a second format. In some embodiments, the video decoder 500 can scale the color space between the BT.709 video standard and an Ultra High Definition Television (UHDTV) video standard corresponding to the second format.

There are several ways for the video decoder 500 to scale the color space supported by BT.709 video coding standard to a color space supported by the UHDTV video standard, such as independent channel prediction and affine mixed channel prediction. For example, the independent color channel prediction can scale YUV components of the encoded BT.709 image frames separately, for example, as shown above in Equations 1-6. The affine mixed channel prediction can scale YUV components of the encoded BT.709 image frames with a matrix multiplication, for example, as shown above in Equations 7-9.

The video decoder 500 can select a type of color space scaling to perform, such as independent channel prediction or one of the varieties of affine mixed channel prediction based on channel prediction parameters the video decoder 500 receives from the video encoder 300. In some embodiments, the video decoder 500 can perform a default or preset color space scaling of the decoded BT.709 image frames.

In some embodiments, the video decoder 500 can scale a resolution of the first residual frame from the first format into a resolution corresponding to the second format. For example, the UHDTV video standard can support a 4k (3840x2160 pixels) or an 8k (7680x4320 pixels) resolution and a 10 or 12 bit quantization bit-depth. The BT.709 video standard can support a 2k (1920x1080 pixels) resolution and an 8 or 10 bit quantization bit-depth. The video decoder 500 can scale the decoded first residual frame from a resolution corresponding to the BT.709 video standard into a resolution corresponding to the UHDTV video standard.

At a block 930, the video decoder 500 can generate a color space prediction based, at least in part, on the scaled color space of the first residual frame. The color space prediction can be a prediction of a UHDTV image frame (or portion thereof) from a color space of a corresponding decoded BT.709 image frame. In some embodiments, the video decoder 500 can generate the color space prediction based, at least in part, on the scaled resolution of the first residual frame.

At a block 940, the video decoder 500 can decode the encoded video stream into a second image having the second format based, at least in part, on the color space prediction. In some embodiments, the video decoder 500 can utilize the color space prediction to combine with a portion of the encoded video stream corresponding to a prediction residue from the video encoder 300. The combination of the color space prediction and the decoded prediction residue can correspond to a decoded UHDTV image frame or portion thereof.

The system and apparatus described above may use dedicated processor systems, micro controllers, programmable logic devices, microprocessors, or any combination thereof, to perform some or all of the operations described herein. Some of the operations described above may be implemented in software and other operations may be implemented in hardware. Any of the operations, processes, and/or methods described herein may be performed by an apparatus, a device, and/or a system substantially similar to those as described herein and with reference to the illustrated figures.

The processing device may execute instructions or "code" stored in memory. The memory may store data as well. The processing device may include, but may not be limited to, an analog processor, a digital processor, a microprocessor, a multi-core processor, a processor array, a network processor, or the like. The processing device may be part of an integrated control system or system manager, or may be provided as a portable electronic device configured to interface with a networked system either locally or remotely via wireless transmission.

The processor memory may be integrated together with the processing device, for example RAM or FLASH memory disposed within an integrated circuit microprocessor or the like. In other examples, the memory may comprise an independent device, such as an external disk drive, a storage array, a portable FLASH key fob, or the like. The memory and processing device may be operatively coupled together, or in communication with each other, for example by an I/O port, a network connection, or the like, and the processing device may read a file stored on the memory. Associated memory may be "read only" by design (ROM) by virtue of permission settings, or not. Other examples of memory may include, but may not be limited to, WORM, EPROM, EEPROM, FLASH, or the like, which may be implemented in solid state semiconductor devices. Other memories may comprise moving parts, such as a known rotating disk drive. All such memories may be "machine-readable" and may be readable by a processing device.

Operating instructions or commands may be implemented or embodied in tangible forms of stored computer software (also known as "computer program" or "code"). Programs, or code, may be stored in a digital memory and may be read by the processing device. "Computer-readable storage medium" (or alternatively, "machine-readable storage medium") may include all of the foregoing types of memory, as well as new technologies of the future, as long as the memory may be capable of storing digital information in the nature of a computer program or other data, at least temporarily, and as long at the stored information may be "read" by an appropriate processing device. The term "computer-readable" may not be limited to the historical usage of "computer" to imply a complete mainframe, mini-computer, desktop or even laptop computer. Rather, "computer-readable" may comprise storage medium that may be readable by a processor, a processing device, or any computing system. Such media may be any available media that may be locally and/or remotely accessible by a computer or a processor, and may include volatile and non-volatile media, and removable and non-removable media, or any combination thereof.

A program stored in a computer-readable storage medium may comprise a computer program product. For example, a storage medium may be used as a convenient means to store or transport a computer program. For the sake of convenience, the operations may be described as various interconnected or coupled functional blocks or diagrams. However, there may be cases where these functional blocks or diagrams may be equivalently aggregated into a single logic device, program or operation with unclear boundaries.

One of skill in the art will recognize that the concepts taught herein can be tailored to a particular application in many other ways. In particular, those skilled in the art will recognize that the illustrated examples are but one of many alternative implementations that will become apparent upon reading this disclosure.

Although the specification may refer to "an", "one", "another", or "some" example(s) in several locations, this does not necessarily mean that each such reference is to the same example(s), or that the feature only applies to a single example.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

**Claims**

1. An encoding method performed by an encoding apparatus comprising an enhancement layer encoder (302), a base layer encoder (304) and an output unit (380), the method comprising:

    performing the following steps by the enhancement encoder (302), for each Ultra High Definition Television Video, UHDTV, image frame of a UHDTV video stream:

    • receiving, by a video input unit (310), the UHDTV image frame;
    • generating, by a combination unit (315), a prediction residue between a prediction of the UHDTV frame and the UHDTV frame;
    • performing, by a transform and quantization unit (320), a transformation and quantization of the prediction residue;
    • entropy encoding, by a first entropy encoding unit (330), the transformed and quantized prediction residue;
    • performing scaling and inverse transformation, by a scaling and inverse transformation unit (322), on the transformed and quantized prediction residue;
    • adding, by a combination unit (325), the scaled and inverse transformed prediction residue to the prediction of the UHDTV frame used to generate the prediction residue, thereby generating a decoded UHDTV image frame;
    • filtering, by a deblocking unit (351), the decoded UHDTV frame and storing, by the deblocking unit (351), the filtered and decoded UHDTV frame into a first frame buffer (340);
    • selecting, by a prediction selection unit (350), the prediction to be one of a first prediction obtained by performing a color space conversion and a resolution upscaling, a second prediction obtained by motion compensation, and a third prediction obtained by intra prediction, wherein the color space conversion is performed by scaling a YUV color space of a reconstructed BT.709 image frame to correspond to a YUV representation supported by the UHDTV video format of the UHDTV image frame,
    and wherein, when performing the first prediction, the method further comprises:
    performing the color space conversion and the resolution upscaling jointly on the reconstructed BT.709 image frame, on the basis of a combined calculation, by a joint resolution upscaling and color prediction unit (375);
    • feeding, by the first entropy encoding unit (330), the transformed and quantized prediction residue to the output unit (380);

    and performing for each BT.709 image frame of a BT.709 video stream (104) the following steps by the base layer encoder (304):

    • receiving , by a video input unit (362), the BT. 709 image frame;
    • encoding, by an encoding prediction loop unit (364), the BT.709 image frame, thereby arriving at an encoded BT.709 image frame,
    • storing, by a second reference buffer (368), the reconstructed BT.709 image frame in the second reference buffer (368), and feeding, by the second reference buffer (368), the reconstructed BT.709 image frame back to the encoding prediction loop unit (364) for use in encoding other portions of a same frame or other frames of the BT.709 video stream and sending, by the second reference buffer (368), the encoded BT.709 image frame to the enhancement layer encoder (302);
    • performing entropy encoding, by a second entropy encoding unit (366), on the encoded BT.709 image frame, thereby arriving at an entropy encoded BT.709 image frame and sending, by the entropy encoding unit (366), the entropy encoded BT.709 image frame to the output unit (380);

    after performing the above steps of the enhancement layer encoder (302) for the received UHDTV image frame and the above steps of the base layer encoder (304) for the received BT.709 image frame:

multiplexing and outputting, by the output unit (380), the entropy encoded BT.709 image frame together with the corresponding entropy encoded prediction residue, and, in case the first prediction was selected, a flag generated by the encoding apparatus for indicating that said first prediction was selected.

2. The method according to claim 1, wherein scaling the YUV color space of the reconstructed BT.709 image frame comprises independently scaling each channel of the YUV color space.

3. The method of claim 1, wherein scaling the YUV color space comprises mixing a luminance channel with a chrominance channel of the reconstructed BT.709 image frame to generate at least a luminance channel or chrominance channel.

4. A decoding method performed by a decoding apparatus comprising an enhancement layer decoder (502), a base layer decoder (504) and an interface unit (510), the method comprising:

receiving, by the interface unit (510), a data stream comprising an entropy encoded business technology, BT,.709 stream together with entropy encoded prediction residues of an Ultra High Definition Television Video, UHDTV, stream, demultiplexing the data stream and feeding the entropy encoded BT.709 stream to the base layer decoder (504) and the entropy encoded prediction residues of the UHDTV video stream to the enhancement layer decoder (502);

and performing, by the enhancement layer decoder (502), for each entropy encoded prediction residue of the UHDTV video stream the following steps:

• performing, by an entropy decoding unit (522), entropy decoding of the entropy encoded prediction residue;
• performing, by an inverse quantization unit (524), an inverse quantization on the entropy decoded prediction residue;
• performing, by an inverse transforming unit (526), an inverse transformation on the inverse quantized entropy decoded prediction residue;
• combining, by a combination unit (528), an output of the inverse transforming unit (526) with a prediction of a UHDTV image frame corresponding to the prediction residue, thereby arriving at a decoded UHDTV image frame;
• filtering, by a deblocking filter unit (541), the decoded UHDTV image frame;
• storing, by a first reference buffer (530), the filtered, decoded UHDTV image frame in a first reference buffer (530);
• selecting, by a prediction selection unit (540), one of a first prediction obtained by performing a color space conversion and a resolution upscaling, a second prediction obtained by motion compensation, and a third prediction obtained by intra prediction,
wherein the first prediction is selected if within the received data stream a flag is present indicating to perform said first prediction,
wherein the color space conversion is performed by scaling a YUV color space of a decoded BT.709 image frame to correspond to a YUV representation supported by the UHDTV video format of the decoded UHDTV image frame,
and wherein when said first prediction is selected, the following step is further performed:
performing the color space conversion and the resolution upscaling jointly on the decoded BT.709 image frame, on the basis of a combined calculation, by a joint resolution upscaling and color prediction unit (575);
• outputting, by the first reference buffer (530), the filtered, decoded UHDTV image frame;

and performing for each entropy encoded BT.709 image frame the following steps by the base layer decoder (504):

• entropy decoding, by a entropy decoding unit (552), the entropy encoded BT.709 image frame, thereby arriving at an entropy decoded BT.709 image frame;
• decoding, by a decoding prediction loop unit (554), the entropy decoded BT.709 image frame, thereby arriving at a decoded BT.709 image frame, and storing, by the decoding prediction loop unit (364), the decoded BT.709 image frame in a second reference buffer (556);
• feeding, by the second reference buffer (556), the decoded BT.709 image frame back to the decoding prediction loop unit (502) for use in decoding other portions of a same frame or other frames of the encoded BT.709 video stream and sending, by the second reference buffer (368), the decoded BT.709 image frame to the enhancement layer decoder (502) and outputting, by the base layer decoder (504), the decoded BT.709 image frame.

**5.** The method of claim 4, wherein scaling the YUV color space of the decoded BT.709 image frame further comprises independently scaling each channel of the YUV color space.

**6.** The method of claim 4, wherein scaling the YUV color space of the decoded BT. 709 image frame further comprises mixing a luminance channel with a chrominance channel of the decoded BT.709 image frame to generate at least a luminance channel or chrominance channel of the first prediction.

**7.** The method of claim 4, wherein scaling the YUV color space of the decoded BT.709 image frame is based, at least in part, on color prediction parameters provided in the received data stream and used for performing the first prediction.

**8.** The method of claim 7, further comprising selecting a type of color space scaling to perform in response to the color prediction parameters, wherein scaling the YUV color space of the decoded BT.709 image frame is based on the selected type of color space scaling.

**9.** A video encoder configured to perform any of the methods according to claims 1-3.

**10.** A video decoder configured to perform any of the methods according to claims 4-8.

**Patentansprüche**

**1.** Codierverfahren, das durch eine Codiereinrichtung durchgeführt wird, die einen Erweiterungsschichtcodierer (302), einen Basisschichtcodierer (304) und eine Ausgabeeinheit (380) umfasst, wobei das Verfahren umfasst:

Durchführen der folgenden Schritte durch den Erweiterungsschichtcodierer (302), für jeden "Ultra High Definition Television Video"(UHDTV)-Bildframe eines UHDTV-Videostroms:

• Empfangen, durch eine Videoausgabeeinheit (310), des UHDTV-Bildframes;
• Erzeugen, durch eine Kombinationseinheit (315), eines Prädiktionsresiduums zwischen einer Prädiktion des UHDTV-Frame und des UHDTV-Frame;
• Durchführen, durch eine Transformations- und Quantisierungseinheit (320), einer Transformation und Quantisierung des Prädiktionsresiduums;
• Entropiecodieren, durch eine erste Entropiecodiereinheit (330), des transformierten und quantisierten Prädiktionsresiduums;
• Durchführen einer Skalierung und inversen Transformation, durch eine Skalierungs- und inverse Transformationseinheit (322), an dem transformierten und quantisierten Prädiktionsresiduums;
• Hinzufügen, durch eine Kombinationseinheit (325), des skalierten und invers transformierten Prädiktionsresiduums zu der Prädiktion des UHDTV-Frame, der zum Erzeugen des Prädiktionsresiduums verwendet wurde, wodurch ein decodierter UHDTV-Bildframe erzeugt wird;
• Filtern, durch eine Entblockungseinheit (351), des decodierten UHDTV-Frame und Speichern, durch die Entblockungseinheit (351), des gefilterten und decodierten UHDTV-Frame in einem ersten Framepuffer (340);
• Auswählen, durch eine Prädiktionsauswahleinheit (350), der Prädiktion als eines einer ersten Prädiktion, die durch Durchführen einer Farbraumumwandlung und einer Auflösungshochskalierung erhalten wurde, einer zweiten Prädiktion, die durch eine Bewegungskompensation erhalten wurde, und einer dritten Prädiktion, die durch Intraprädiktion erhalten wurde, wobei die Farbraumumwandlung durch Skalieren eines YUV-Farbraums eines rekonstruierten BT.709-Bildframe durchgeführt wird, um einer YUV-Darstellung zu entsprechen, die durch das UHDTV-Videoformat des UHDTV-Frame unterstützt wird, und wobei, bei Durchführen der ersten Prädiktion, das Verfahren ferner umfasst:
Durchführen der Farbraumumwandlung und der Auflösungshochskalierung gemeinsam an dem rekonstruierten BT.709-Bildframe, auf der Grundlage einer kombinatorischen Berechnung, durch eine gemeinsame Auflösungshochskalierungs- und Farbprädiktionseinheit (375);
• Zuführen, durch die erste Entropiecodiereinheit (330), des transformierten und quantisierten Prädiktionsresiduums zu der Ausgabeeinheit (380);

und Durchführen, für jeden BT.709-Bildframe eines BT.709-Videostroms (104), der folgenden Schritte durch den Basisschichtcodierer (304):

- Empfangen, durch eine Videoeingabeeinheit (362), des BT.709-Bildframe;
- Codieren, durch eine Codier-Prädiktionsschleifeneinheit (364), des BT.709-Bildframe, wodurch ein codierter BT.709-Bildframe erreicht wird,
- Speichern, durch einen zweiten Referenzpuffer (368), des rekonstruierten BT.709-Bildframe in dem zweiten Referenzpuffer (368), und Zuführen, durch den zweiten Referenzpuffer (368), des rekonstruierten BT.709-Bildframe zurück zu der Codier-Prädiktionsschleifeneinheit (364) zur Verwendung bei einem Codieren anderer Teile eines gleichen Frame oder anderer Frames des BT.709-Videostroms und Senden, durch den zweiten Referenzpuffer (368), des codierten BT.709-Bildframe an den Erweiterungsschichtcodierer (302);
- Durchführen eines Entropiecodierens, durch eine zweite Entropiecodiereinheit (366), an dem codierten BT.709-Bildframe, wodurch ein entropiecodierter BT.709-Bildframe erreicht wird, und Senden, durch die Entropiecodiereinheit (366), des entropiecodierten BT.709-Bildframe an die Ausgabeeinheit (380);

nach Durchführen der obigen Schritte des Erweiterungsschichtcodierers (302) für den empfangenen UHDTV-Bildframe und der obigen Schritte des Basisschichtcodierers (304) für den empfangenen BT.709-Bildframe: Multiplexieren und Ausgeben, durch die Ausgabeeinheit (380), des entropiecodierten BT.709-Bildframe zusammen mit dem entsprechenden entropiecodierten Prädiktionsresiduum, und, im Fall, dass die erste Prädiktion ausgewählt wurde, einer durch die Codiereinrichtung erzeugten Kennzeichnung, die anzeigt, dass die erste Prädiktion ausgewählt wurde.

2. Verfahren nach Anspruch 1, wobei das Skalieren des YUV-Farbraums des rekonstruierten BT.709-Bildframe unabhängiges Skalieren jedes Kanals des YUV-Farbraums umfasst.

3. Verfahren nach Anspruch 1, wobei das Skalieren des YUV-Farbraums Mischen eines Luminanzkanals mit einem Chrominanzkanal des rekonstruierten BT.709-Bildframe umfasst, um mindestens einen Luminanzkanal oder Chrominanzkanal zu erzeugen.

4. Decodierverfahren, das durch eine Decodiereinrichtung durchgeführt wird, umfassend einen Erweiterungsschichtdecodierer (502), einen Basisschichtdecodierer (504) und eine Schnittstelleneinheit (510), wobei das Verfahren umfasst:

Empfangen, durch die Schnittstelleneinheit (510), eines Datenstroms umfassend einen entropiecodierten "Business Technology"-BT.709-Strom zusammen mit entropiecodierten Prädiktionsresiduen eines "Ultra High Definition Television Video"(UHDTV)-Stroms, Demultiplexieren des Datenstroms und Zuführen des entropiecodierten BT.709-Stroms zu dem Basisschichtdecodierer (504) und der entropiecodierten Prädiktionsresiduen des UHDTV-Videostroms zu dem Erweiterungsschichtdecodierer (502);
und Durchführen, durch den Erweiterungsschichtdecodierer (502), für jedes entropiecodierte Prädiktionsresiduum des UHDTV-Videostroms, der folgenden Schritte:

- Durchführen, durch eine Entropiedecodiereinheit (522), eines Entropiedecodierens des entropiecodierten Prädiktionsresiduums;
- Durchführen, durch eine inverse Quantisierungseinheit (524), einer inversen Quantisierung an dem entropiedecodierten Prädiktionsresiduum;
- Durchführen, durch eine inverse Transformationseinheit (526), einer inversen Transformation an dem invers quantisierten, entropiedecodierten Prädiktionsresiduum;
- Kombinieren, durch eine Kombinationseinheit (528), einer Ausgabe der inversen Transformationseinheit (526) mit einer Prädiktion eines UHDTV-Bildframe entsprechend dem Prädiktionsresiduum, wodurch ein decodierter UHDTV-Bildframe erreicht wird;
- Filtern, durch eine Entblockungsfiltereinheit (541), des decodierten UHDTV-Bildframe;
- Speichern, durch einen ersten Referenzpuffer (530), des gefilterten, decodierten UHDTV-Bildframe in einem ersten Referenzpuffer (530);
- Auswählen, durch eine Prädiktionsauswahleinheit (540), eines einer ersten Prädiktion, die durch Durchführen einer Farbraumumwandlung und einer Auflösungshochskalierung erhalten wurde, einer zweiten Prädiktion, die durch eine Bewegungskompensation erhalten wurde, und einer dritten Prädiktion, die durch Intraprädiktion erhalten wurde,
wobei die erste Prädiktion ausgewählt wird, wenn in dem empfangenen Datenstrom eine Kennzeichnung vorhanden ist, die anzeigt, die erste Prädiktion durchzuführen,

wobei die Farbraumumwandlung durch Skalieren eines YUV-Farbraums eines decodierten BT.709-Bildframe durchgeführt wird, um einer YUV-Darstellung zu entsprechen, die durch das UHDTV-Videoformat des decodierten UHDTV-Bildframe unterstützt wird,

und wobei, wenn die erste Prädiktion ausgewählt wird, ferner der folgende Schritt durchgeführt wird: Durchführen der Farbraumumwandlung und der Auflösungshochskalierung gemeinsam an dem decodierten BT.709-Bildframe, auf der Grundlage einer kombinatorischen Berechnung, durch eine gemeinsame Auflösungshochskalierungs- und Farbprädiktionseinheit (575);
• Ausgeben, durch den ersten Referenzpuffer (530), des gefilterten, decodierten UHDTV-Bildframe;

und Durchführen, für jeden entropiecodierten BT.709-Bildframe, der folgenden Schritte durch den Basisschichtdecodierer (504):

• Entropiedecodieren, durch eine Entropiedecodiereinheit (552), des entropiecodierten BT.709-Bildframe, wodurch ein entropiedecodierter BT.709-Bildframe erreicht wird;
• Decodieren, durch eine Decodier-Prädiktionsschleifeneinheit (554), des entropiedecodierten BT.709-Bildframe, wodurch ein decodierter BT.709-Bildframe erreicht wird, und Speichern, durch die Decodier-Prädiktionsschleifeneinheit (364), des decodierten BT.709-Bildframe in einem zweiten Referenzpuffer (556);
• Zuführen, durch den zweiten Referenzpuffer (556), des decodierten BT.709-Bildframe zurück zu der Decodier-Prädiktionsschleifeneinheit (502) zur Verwendung bei einem Decodieren anderer Teile eines gleichen Frame oder anderer Frames des codierten BT.709-Videostroms und Senden, durch den zweiten Referenzpuffer (368), des decodierten BT.709-Bildframe an den Erweiterungsschichtdecodierer (502) und Ausgeben, durch den Basisschichtdecodierer (504), des decodierten BT.709-Bildframe.

5. Verfahren nach Anspruch 4, wobei das Skalieren des YUV-Farbraums des decodierten BT.709-Bildframe ferner unabhängiges Skalieren jedes Kanals des YUV-Farbraums umfasst.

6. Verfahren nach Anspruch 4, wobei das Skalieren des YUV-Farbraums des decodierten BT.709-Bildframe ferner Mischen eines Luminanzkanals mit einem Chrominanzkanal des decodierten BT.709-Bildframe umfasst, um mindestens einen Luminanzkanal oder Chrominanzkanal der ersten Prädiktion zu erzeugen.

7. Verfahren nach Anspruch 4, wobei das Skalieren des YUV-Farbraums des decodierten BT.709-Bildframe zumindest teilweise auf Farbprädiktionsparametern basiert, die in dem empfangenen Datenstrom bereitgestellt und zum Durchführen der ersten Prädiktion verwendet werden.

8. Verfahren nach Anspruch 7, ferner umfassend Auswählen einer Art von Farbraumskalierung zum Durchführen in Reaktion auf die Farbprädiktionsparameter, wobei das Skalieren des YUV-Farbraums des decodierten BT.709-Bildframe auf der ausgewählten Art von Farbraumskalierung basiert.

9. Videocodierer, der ausgestaltet ist, eines der Verfahren nach einem der Ansprüche 1-3 durchzuführen.

10. Videodecodierer, der ausgestaltet ist, eines der Verfahren nach einem der Ansprüche 4-8 durchzuführen.

## Revendications

1. Procédé de codage exécuté par un appareil de codage comprenant un codeur de couche d'amélioration (302), un codeur de couche de base (304) et une unité de sortie (380), le procédé comprenant de :

effectuer les étapes suivantes par le codeur d'amélioration (302), pour chaque trame d'image de vidéo de télévision à ultra haute définition, UHDTV, d'un flux vidéo UHDTV:

• recevoir, par une unité d'entrée vidéo (310), la trame d'image UHDTV ;
• générer, par une unité de combinaison (315), un résidu de prédiction entre une prédiction de la trame UHDTV et la trame UHDTV ;
• effectuer, par une unité de transformation et de quantification (320), une transformation et une quantification du résidu de prédiction ;
• coder par entropie, par une première unité de codage entropique (330), le résidu de prédiction transformé et quantifié ;

• effectuer une mise à l'échelle et une transformation inverse, par une unité de mise à l'échelle et de transformation inverse (322), sur le résidu de prédiction transformé et quantifié ;

• ajouter, par une unité de combinaison (325), le résidu de prédiction mis à l'échelle et transformé de manière inverse à la prédiction de la trame UHDTV utilisée pour générer le résidu de prédiction, générant ainsi une trame d'image UHDTV décodée ;

• filtrer, par une unité de déblocage (351), la trame UHDTV décodée et stocker, par l'unité de déblocage (351), la trame UHDTV filtrée et décodée dans un premier tampon de trame (340) ;

• sélectionner, au moyen d'une unité de sélection de prédiction (350), la prédiction pour être l'une d'une première prédiction obtenue en effectuant une conversion d'espace couleur et une augmentation de résolution, d'une seconde prédiction obtenue par compensation de mouvement, et d'une troisième prédiction obtenue par intraprédiction, dans lequel la conversion d'espace couleur est effectuée en adaptant l'espace couleur YUV d'une trame d'image BT.709 reconstruite pour correspondre à une représentation YUV supportée par le format vidéo UHDTV de la trame d'image UHDTV,

et dans lequel, lors de l'exécution de la première prédiction, le procédé comprend en outre de :
effectuer la conversion d'espace couleur et l'augmentation de résolution conjointement sur la trame d'image BT.709 reconstruite, sur la base d'un calcul combiné, par une unité d'augmentation de résolution et de prédiction de couleurs commune (375) ;

• fournir, par la première unité de codage entropique (330), le résidu de prédiction transformé et quantifié à l'unité de sortie (380) ;

et effectuer pour chaque trame d'image BT.709 d'un flux vidéo BT.709 (104) les étapes suivantes avec le codeur de couche de base (304) :

• recevoir, par une unité d'entrée vidéo (362), la trame d'image BT.709 ;

• coder, par une unité de boucle de prédiction de codage (364), la trame d'image BT.709, obtenant ainsi une trame d'image BT.709 codée,

• stocker, par un second tampon de référence (368), la trame d'image BT.709 reconstruite dans le second tampon de référence (368), et renvoyer, par le second tampon de référence (368), la trame d'image BT.709 reconstruite à l'unité de boucle de prédiction de codage (364) pour être utilisée pour coder d'autres parties d'une même trame ou d'autres trames du flux vidéo BT.709, et envoyer, par le second tampon de référence (368), la trame d'image BT.709 codée au codeur de couche d'amélioration (302) ;

• effectuer un codage entropique, par une seconde unité de codage entropique (366), sur la trame d'image BT.709 codée, obtenant ainsi une trame d'image BT.709 codée par entropie, et envoyer, par l'unité de codage entropique (366), la trame d'image BT.709 codée par entropie à l'unité de sortie (380) ;

après avoir effectué les étapes ci-dessus du codeur de couche d'amélioration (302) pour la trame d'image UHDTV reçue et les étapes ci-dessus du codeur de couche de base (304) pour la trame d'image BT.709 reçue :
multiplexer et sortir, par l'unité de sortie (380), la trame d'image BT.709 codée par entropie conjointement avec le résidu de prédiction codé par entropie correspondant, et, dans le cas où la première prédiction a été sélectionnée, un drapeau est généré par l'appareil de codage pour indiquer que ladite la première prédiction a été sélectionnée.

2. Procédé selon la revendication 1, dans lequel la mise à l'échelle de l'espace couleur YUV de la trame d'image BT.709 reconstruite comprend de mettre à l'échelle indépendamment chaque canal de l'espace couleur YUV.

3. Procédé selon la revendication 1, dans lequel la mise à l'échelle de l'espace couleur YUV comprend de mélanger un canal de luminance avec un canal de chrominance de la trame d'image BT.709 reconstruite pour générer au moins un canal de luminance ou un canal de chrominance.

4. Procédé de décodage exécuté par un appareil de décodage comprenant un décodeur de couche d'amélioration (502), un décodeur de couche de base (504) et une unité d'interface (510), le procédé comprenant de :

recevoir, par l'unité d'interface (510), un flux de données comprenant un flux de technologie métier codé par entropie, BT,.709, ainsi que des résidus de prédiction codés par entropie d'un flux de vidéo de télévision à ultra haute définition, UHDTV, démultiplexer le flux de données et fournir le flux BT.709 codé par entropie au décodeur de couche de base (504) et les résidus de prédiction codés par entropie du flux vidéo UHDTV au décodeur de couche d'amélioration (502) ;

et effectuer, par le décodeur de couche d'amélioration (502), pour chaque résidu de prédiction codé par entropie du flux vidéo UHDTV, les étapes suivantes :

• effectuer, par une unité de décodage entropique (522), un décodage entropique du résidu de prédiction codé par entropie ;

• effectuer, par une unité de quantification inverse (524), une quantification inverse sur le résidu de prédiction décodé par entropie ;

• effectuer, par une unité de transformation inverse (526), une transformation inverse sur le résidu de prédiction décodé par entropie inverse quantifié ;

• combiner, par une unité de combinaison (528), une sortie de l'unité de transformation inverse (526) avec une prédiction d'une trame d'image UHDTV correspondant au résidu de prédiction, obtenant ainsi une trame d'image UHDTV décodée ;

• filtrer, par une unité de filtre de déblocage (541), la trame d'image UHDTV décodée ;

• stocker, par un premier tampon de référence (530), la trame d'image UHDTV décodée filtrée dans un premier tampon de référence (530) ;

• sélectionner, par une unité de sélection de prédiction (540), l'une d'une première prédiction obtenue en effectuant une conversion d'espace couleur et une augmentation de résolution, d'une seconde prédiction obtenue par compensation de mouvement, et d'une troisième prédiction obtenue par intraprédiction,

dans lequel la première prédiction est sélectionnée si, dans le flux de données reçu, un drapeau est présent indiquant de réaliser ladite première prédiction,

dans lequel la conversion d'espace couleur est effectuée en mettant à l'échelle un espace couleur YUV d'une trame d'image BT.709 décodée pour correspondre à une représentation YUV supportée par le format vidéo UHDTV de la trame d'image UHDTV décodée,

et dans lequel, lorsque ladite première prédiction est sélectionnée, l'étape suivante est en outre exécutée :

effectuer la conversion d'espace couleur et l'augmentation de résolution conjointement sur la trame d'image BT.709 décodée, sur la base d'un calcul combiné, par une unité d'augmentation de résolution et de prédiction de couleurs commune (575) ;

• sortir, par le premier tampon de référence (530), la trame d'image UHDTV décodée filtrée ;

et effectuer pour chaque trame d'image BT.709 codée par entropie les étapes suivantes par le décodeur de couche de base (504) :

• décoder par entropie, par une unité de décodage entropique (552), la trame d'image BT.709 codée par entropie, obtenant ainsi une trame d'image BT.709 décodée par entropie ;

• décoder, par une unité de boucle de prédiction de décodage (554), la trame d'image BT.709 décodée par entropie, obtenant ainsi une trame d'image BT.709 décodée, et stocker, par l'unité de boucle de prédiction de décodage (364), la trame d'image BT.709 décodée dans un second tampon de référence (556) ;

• renvoyer, par le second tampon de référence (556), la trame d'image BT.709 décodée à l'unité de boucle de prédiction de décodage (502) pour être utilisée dans le décodage d'autres parties d'une même trame ou d'autres trames du flux vidéo BT.709 codé, et envoyer, par le second tampon de référence (368),

la trame d'image BT.709 décodée au décodeur de couche d'amélioration (502), et sortir, par le décodeur de couche de base (504), la trame d'image BT.709 décodée.

5. Procédé selon la revendication 4, dans lequel la mise à l'échelle de l'espace couleur YUV de la trame d'image BT.709 décodée comprend en outre de mettre à l'échelle indépendamment chaque canal de l'espace couleur YUV.

6. Procédé selon la revendication 4, dans lequel la mise à l'échelle de l'espace couleur YUV de la trame d'image BT.709 décodée comprend en outre de mélanger un canal de luminance avec un canal de chrominance de la trame d'image BT.709 décodée pour générer au moins un canal de luminance ou un canal de chrominance de la première prédiction.

7. Procédé selon la revendication 4, dans lequel la mise à l'échelle de l'espace couleur YUV de la trame d'image BT.709 décodée est basée, au moins en partie, sur des paramètres de prédiction de couleurs fournis dans le flux de données reçu et utilisés pour effectuer la première prédiction.

8. Procédé selon la revendication 7, comprenant en outre de sélectionner un type de mise à l'échelle d'espace couleur à effectuer en réponse aux paramètres de prédiction de couleurs, dans lequel la mise à l'échelle de l'espace couleur YUV de la trame d'image BT.709 décodée est basée sur le type de mise à l'échelle d'espace couleur sélectionné.

9. Codeur vidéo configuré pour exécuter l'un quelconque des procédés selon les revendications 1 à 3.

10. Décodeur vidéo configuré pour exécuter l'un quelconque des procédés selon les revendications 4 à 8.

[Fig. 1]

FIG. 1

UHDTV VIDEO
STREAM 102

BT.709 VIDEO
STREAM 104

VIDEO ENCODER 300

ENHANCEMENT LAYER
ENCODER 302

BASE LAYER ENCODER
304

ENCODED VIDEO STREAM
112

COLOR PREDICTION
PARAMETERS 114

VIDEO DECODER 500

ENHANCEMENT LAYER
DECODER 502

BASE LAYER DECODER
504

DECODED UHDTV
VIDEO STREAM 122

DECODED BT.709
VIDEO STREAM 124

100

[Fig. 2]

FIG. 2

[Fig. 3A]

FIG. 3A

VIDEO ENCODER

# FIG. 3B

VIDEO ENCODER

301

### ENHANCEMENT LAYER ENCODER 302

UHDTV VIDEO STREAM 102 → VIDEO INPUT 310 → (+/−) 315 → TRANSFORM AND QUANTIZE 320 → ENTROPY ENCODING 330

SCALING AND INVERSE TRANSFORM 322

PREDICTION SELECTION 350

(+/+) 325

RESOLUTION UPSCALING 370

MOTION COMPENSATION PREDICTION 354

INTRA PREDICTOR 356

DEBLOCKING 351

REFERENCE BUFFER 340

COLOR SPACE PREDICTOR 400

OUTPUT INTERFACE 380 → ENCODED VIDEO STREAM 112

→ COLOR PREDICTION PARAMETERS 114

### BASE LAYER ENCODER 304

REFERENCE BUFFER 368

BT.709 VIDEO STREAM 104 → VIDEO INPUT 362 → ENCODING PREDICTION LOOP 364 → ENTROPY ENCODING 366

EP 2 898 694 B1

## FIG. 3C

VIDEO ENCODER

300

**ENHANCEMENT LAYER ENCODER 302**

UHDTV VIDEO
STREAM 102 → VIDEO INPUT 310 → + 315 − → TRANSFORM AND QUANTIZE 320 → ENTROPY ENCODING 330

SCALING AND INVERSE TRANSFORM 322

PREDICTION SELECTION 350

+ 325 +

JOINT RESOLUTION UPSCALING AND COLOR SPACE PREDICTOR 375

MOTION COMPENSATION PREDICTION 354

INTRA PREDICTOR 356

DEBLOCKING 351

REFERENCE BUFFER 340

OUTPUT INTERFACE 380

→ ENCODED VIDEO STREAM 112

→ COLOR PREDICTION PARAMETERS 114

**BASE LAYER ENCODER 304**

REFERENCE BUFFER 368

BT.709 VIDEO STREAM 104 → VIDEO INPUT 362 → ENCODING PREDICTION LOOP 364 → ENTROPY ENCODING 366

30

EP 2 898 694 B1

[Fig. 4]

FIG. 4

[Fig. 5A]

FIG. 5A

# FIG. 5B

VIDEO DECODER

501

ENHANCEMENT LAYER DECODER 502

ENTROPY DECODING 522 → INVERSE QUANTIZATION 524 → INVERSE TRANSFORM 526 → + 528 + → DEBLOCKING 541 → REFERENCE BUFFER 530 → DECODED UHDTV VIDEO STREAM 122

COLOR PREDICTION PARAMETERS 114

PREDICTION SELECTION 540

RESOLUTION UPSCALING 570 | MOTION COMPENSATION PREDICTION 542 | INTRA PREDICTOR 544

ENCODED VIDEO STREAM 112 → INTERFACE 510

COLOR PREDICTION PARAMETERS 114 → COLOR SPACE PREDICTOR 600

BASE LAYER DECODER 504

ENTROPY DECODING 552 → DECODING PREDICTION LOOP 554 → REFERENCE BUFFER 556

DECODED BT.709 VIDEO STREAM 124

EP 2 898 694 B1

33

# FIG. 5C

## VIDEO DECODER

500

ENHANCEMENT LAYER DECODER 502

| ENTROPY DECODING 522 | → | INVERSE QUANTIZATION 524 | → | INVERSE TRANSFORM 526 | → | (528) | → | DEBLOCKING 541 |

+ + 528

REFERENCE BUFFER 530

DECODED UHDTV VIDEO STREAM 122

COLOR PREDICTION PARAMETERS 114

PREDICTION SELECTION 540

JOINT RESOLUTION UPSCALING AND COLOR SPACE PREDICTOR 575

MOTION COMPENSATION PREDICTION 542

INTRA PREDICTOR 544

ENCODED VIDEO STREAM 112 → INTERFACE 510

BASE LAYER DECODER 504

DECODED BT.709 VIDEO STREAM 124

ENTROPY DECODING 552 → DECODING PREDICTION LOOP 554 → REFERENCE BUFFER 556

EP 2 898 694 B1

34

[Fig. 6]

FIG. 6

600

DECODED BT.709 VIDEO STREAM 122

COLOR PREDICTION CONTROL DEVICE 610

COLOR PREDICTION PARAMETERS 114

INDEPENDENT CHANNEL PREDICTION 620

AFFINE PREDICTION 630

CROSS-COLOR PREDICTION 640

COLOR SPACE PREDICTION 606

SELECTION DEVICE 650

[Fig. 7]

FIG. 7

```
ENCODING A FIRST IMAGE HAVING A FIRST IMAGE FORMAT

                                                            710
```

```
SCALING A COLOR SPACE OF THE ENCODED FIRST IMAGE FROM THE FIRST IMAGE
FORMAT INTO A COLOR SPACE CORRESPONDING TO A SECOND IMAGE FORMAT

                                                            720
```

```
GENERATING A COLOR SPACE PREDICTION BASED, AT LEAST IN PART, ON THE
SCALED COLOR SPACE OF THE ENCODED FIRST IMAGE

                                                            730
```

```
ENCODING A SECOND IMAGE HAVING THE SECOND IMAGE FORMAT BASED, AT LEAST
IN PART, ON THE COLOR SPACE PREDICTION

                                                            740
```

EP 2 898 694 B1

[Fig. 8]

FIG. 8

DECODING AT LEAST A PORTION OF AN ENCODED VIDEO STREAM TO GENERATE A FIRST IMAGE HAVING A FIRST IMAGE FORMAT

810

SCALING A COLOR SPACE OF THE FIRST IMAGE CORRESPONDING TO THE FIRST IMAGE FORMAT INTO A COLOR SPACE CORRESPONDING TO A SECOND IMAGE FORMAT

820

GENERATING A COLOR SPACE PREDICTION BASED, AT LEAST IN PART, ON THE SCALED COLOR SPACE OF THE FIRST IMAGE

830

DECODING THE ENCODED VIDEO STREAM INTO A SECOND IMAGE HAVING THE SECOND IMAGE FORMAT BASED, AT LEAST IN PART, ON THE COLOR SPACE PREDICTION

840

37

[Fig. 9]

FIG. 9

DECODING AT LEAST A PORTION OF AN ENCODED VIDEO STREAM TO GENERATE A
FIRST RESIDUAL FRAME HAVING A FIRST FORMAT

910

SCALING A COLOR SPACE OF THE FIRST RESIDUAL FRAME CORRESPONDING TO THE
FIRST FORMAT INTO A COLOR SPACE CORRESPONDING TO A SECOND FORMAT

920

GENERATING A COLOR SPACE PREDICTION BASED, AT LEAST IN PART, ON THE
SCALED COLOR SPACE OF THE FIRST RESIDUAL FRAME

930

DECODING THE ENCODED VIDEO STREAM INTO A SECOND IMAGE HAVING THE
SECOND FORMAT BASED, AT LEAST IN PART, ON THE COLOR SPACE PREDICTION

940

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100008427 A1
- US 20050259729 A1

**Non-patent literature cited in the description**

- Color Gamut Scalable Video Coding. **KEROFSKY L et al.** 12. JCT-VC MEETING. MPEG MEETING, 14 January 2013, vol. 103
- Color Gamut Scalable Video Coding. **KEROFSKY L et al.** 11. JCT-VC MEETING. MPEG MEETING, 10 October 2012, vol. 102